# EUROPEAN PATENT SPECIFICATION

(11) **EP 3 122 144 B1**
(45) Date of publication and mention of the grant of the patent: **12.12.2018**
(21) Application number: 14889260.7
(22) Date of filing: 16.04.2014
(51) Int. Cl.: H04W 12/08, H04W 48/14, H04L 29/06, H04L 29/12

(54) **DEVICE AND METHOD FOR ACCESSING WIRELESS NETWORK**
VORRICHTUNG UND VERFAHREN FÜR ZUGRIFF AUF EIN DRAHTLOSES NETZWERK
DISPOSITIF ET PROCÉDÉ D'ACCÈS À UN RÉSEAU SANS FIL

(43) Date of publication of application: 25.01.2017
(73) Proprietor: Huawei Device Co., Ltd., Shenzhen, Guangdong 518129 (CN)
(72) Inventor: LI, Nian, Shenzhen, Guangdong 518129 (CN); ZHANG, Ke, Shenzhen, Guangdong 518129 (CN)
(74) Representative: Körber, Martin Hans
(86) International application number: PCT/CN2014/075498
(87) International publication number: WO 2015/157942

(56) References cited:
- WO-A1-2013/038359
- CN-A- 101 317 477
- CN-A- 102 572 836
- US-A1- 2006 153 122
- US-A1- 2008 220 741
- US-A1- 2010 020 746
- US-A1- 2012 317 619
- US-A1- 2013 103 807
- US-A1- 2014 029 512

## Description

### TECHNICAL FIELD

This application relates to the field of communications networks, and in particular, to a wireless network access apparatus and method.

### BACKGROUND

As wireless network communications technologies develop, a Wireless Fidelity (Wireless Fidelity, WiFi) technology is more widely applied, and more terminals access a core network by using a WiFi access point (Access Point, AP). Any terminal in a coverage area of the AP can receive a signal sent by the AP so as to access the core network. Therefore, to ensure security of network information and prevent information leakage of an end user, the AP needs to be encrypted to prevent an unauthorized end user from accessing, by using the AP, the core network for communication.

An encryption method currently used is Wi-Fi Protected Access (Wi-Fi Protected Access, WPA), where the WPA is divided into a WPA standard and a WPA2 standard. Enabling or disabling a WPA function is set in the AP, to implement whether the AP is encrypted. When the AP enables a WPA/WPA2 function, the AP authorizes a terminal by identifying a correct pre-shared key (Pre-Shared Key, PSK), and only an authorized terminal can access the core network by using the AP. When the WPA/WPA2 function is disabled, it indicates that the AP is not encrypted. In this case, any terminal device can access the core network by using the AP.

In a case in which a Wi-Fi wireless network is encrypted by using the WPA2 standard and the AP enables the WPA/WPA2 function, a most conventional wireless network access method is provided in the prior art. A user sets a Wi-Fi configuration function on a terminal to search for currently available wireless networks, selects, from the found networks, a service set identifier (Service Set Identifier, SSID) that needs to be connected to, that is, a Wi-Fi wireless network name, and enters a preset PSK in a displayed password box, to complete a network connection.

US 2013/0103807 A1 discloses a method of exchanging configuration information needed to authenticate an unregistered Wi-Fi client device to an access point of a wireless local area network is described. A SSID of the AP and a temporary hidden secondary SSID of the AP are enabled for a preset time period with a residential gateway providing the AP of the WLAN. A message is received in the form of IP UDP packets by the residential gateway to the temporary hidden secondary SSID of the AP during the preset time period requesting network configuration information. The residential gateway transmits the requested network configuration information via return message in the form of IP UDP packets on the temporary hidden secondary SSID of the AP.

However, the PSK is a character string including 8 to 63 characters or a 256-bit binary number that is preset in the AP by the user. Therefore, a longer character string indicates a better effect of defense against a network attack. However, the user may have trouble in entering an excessively long character string and is prone to make mistakes in an entering process. If the entered character string is excessively simple, exposure to an attack from a network attack tool increases. Although security is higher by using a binary password, the binary password cannot be manually entered. Therefore, when a terminal accesses a wireless network, a problem that network security and a user operation cannot be both considered exists in the prior art.

### SUMMARY

A technical problem to be mainly resolved in this application is providing a wireless network access apparatus and method, which can improve network security and are more convenient for a user to access a wireless network.

To resolve the foregoing problem, a first aspect of this application provides a wireless network access apparatus, including a receiving module, a control module, and a sending module, where: the receiving module is configured to receive, by using a first wireless network, access request information sent by a terminal, where the access request information is used to indicate that the terminal requests to access the first wireless network; the receiving module is further configured to receive, by using the first wireless network, request information that is of acquiring a service set identifier and an access password of a second wireless network and is sent by the terminal, where the request information of acquiring the service set identifier and the access password of the second wireless network is used to indicate that the terminal requests to acquire the service set identifier and the access password for accessing the second wireless network; the receiving module is further configured to receive, by using the first wireless network, a service set identifier and an access password that are sent by the terminal; the control module is configured to allocate a first IP address to the terminal according to the access request information received by the receiving module; the control module is further configured to: when the terminal is determined as a target terminal according to the access request information received by the receiving module or the request information, received by the receiving module, of acquiring the service set identifier and the access password of the second wireless network, allocate, to the terminal, the service set identifier and the access password for accessing the second wireless network, whereby the target terminal is the terminal that is the first one for accessing the first wireless network; the control module is further configured to: when it is determined that the service set identifier and the access password of the second wireless network match the received service set identifier and access password, allocate a second IP address to the terminal; the sending module is configured to send, to the terminal by using the first wireless network, the first IP address allocated by the control module, so that the terminal accesses the first wireless network according to the first IP address; the sending module is further configured to send, to the terminal by using the first wireless network, the service set identifier and the access password that are of the second wireless network and allocated by the control module; and the sending module is further configured to send, to the terminal by using the second wireless network, the second IP address allocated by the control module, so that the terminal accesses the second wireless network according to the second IP address.

With reference to the first aspect, in a first possible implementation manner of the first aspect of this application, the control module is further configured to: when the terminal is determined as the target terminal according to the access request information received by the receiving module or the request information, received by the receiving module, of acquiring the service set identifier and the access password of the second wireless network, add a MAC address of the terminal to a name list that is allowed to access the second wireless network.

With reference to the first aspect or the first possible implementation manner of the first aspect, in a second possible implementation manner of the first aspect of this application, the control module is further configured to hide the service set identifier of the second wireless network.

With reference to any possible implementation manner of the first aspect, in a third possible implementation manner of the first aspect of this application, when it is determined that a time at which the access request information is received falls within a preset time, the control module is configured to allocate the first IP address to the terminal according to the access request information received by the receiving module.

To resolve the foregoing problem, a second aspect of this application provides a terminal, and the terminal includes a sending module, a control module, and a receiving module, where: the sending module is configured to send access request information, where the access request information is used to indicate that the terminal requests to access a first wireless network of an access point; the sending module is further configured to send request information of acquiring a service set identifier and an access password, where the request information of acquiring the service set identifier and the access password is used to indicate that the terminal requests to acquire the service set identifier and the access password for accessing a second wireless network of the access point; the sending module sends the access request information and the request information of acquiring the service set identifier and the access password to the access point; the receiving module is configured to receive a first IP address sent by the access point according to the access request information; the receiving module is further configured to receive the service set identifier and the access password that are of the second wireless network and sent by the access point, where when the access point determines the terminal as a target terminal according to the access request information or the request information of acquiring the service set identifier and the access password, the service set identifier and the access password of the second wireless network are a service set identifier and an access password that are sent to the terminal, whereby the target terminal is the terminal that is the first one for accessing the first wireless network; the receiving module is further configured to receive a second IP address sent by the access point, where when the access point determines that the service set identifier and the access password of the second wireless network match the received service set identifier and access password, the second IP address is an IP address allocated to the terminal; the receiving module sends the first IP address, the service set identifier and the access password for accessing the second wireless network, and the second IP address to the control module; the control module is configured to receive the first IP address and access the first wireless network of the access point according to the first IP address; the control module is further configured to receive the service set identifier and the access password of the second wireless network and request to connect to the second wireless network by using the service set identifier and the access password for accessing the second wireless network; and the control module is further configured to receive the second IP address and access the second wireless network according to the second IP address.

With reference to the second aspect, in a first possible implementation manner of the second aspect of this application, the control module is further configured to: after the terminal accesses the second wireless network according to the second IP address, delete a service set identifier of the first wireless network.

To resolve the foregoing problem, a third aspect of this application provides a wireless network access method, including the following steps: receiving, by using a first wireless network, access request information sent by a terminal, and allocating a first IP address to the terminal according to the access request information, where the access request information is used to indicate that the terminal requests to access the first wireless network; sending the first IP address to the terminal by using the first wireless network, so that the terminal accesses the first wireless network according to the first IP address; receiving, by using the first wireless network, request information that is of acquiring a service set identifier and an access password and sent by the terminal, where the request information of acquiring the service set identifier and the access password is used to indicate that the terminal requests to acquire the service set identifier and the access password for accessing a second wireless network; allocating, to the terminal, the service set identifier and the access password for accessing the second wireless network, and sending the service set identifier and the access password of the second wireless network to the terminal by using the first wireless network, when the terminal is determined as a target terminal according to the access request information or the request information of acquiring the service set identifier and the access password, whereby the target terminal is the terminal that is the first one for accessing the first wireless network; when it is determined that the allocated service set identifier and access password of the second wireless network match a received service set identifier and access password, allocating a second IP address to the terminal; and sending the second IP address to the terminal by using the second wireless network, so that the terminal accesses the second wireless network according to the second IP address.

With reference to the third aspect, in a first possible implementation manner of the third aspect of this application, the step of allocating, to the terminal, the service set identifier and the access password for accessing the second wireless network, and sending the service set identifier and the access password of the second wireless network to the terminal by using the first wireless network, when the terminal is determined as a target terminal according to the access request information or the request information of acquiring the service set identifier and the access password further includes: adding a MAC address of the terminal to a name list that is allowed to access the second wireless network.

With reference to the third aspect or the first possible implementation manner of the third aspect, in a second possible implementation manner of the fifth aspect of this application, the method further includes: hiding the service set identifier of the second wireless network.

With reference to any possible implementation manner of the third aspect, in a third possible implementation manner of the third aspect of this application, the step of receiving access request information sent by a terminal, and allocating a first IP address to the terminal according to the access request information is specifically: when it is determined that a time at which the access request information is received falls within a preset time, allocating the first IP address to the terminal according to the access request information.

To resolve the foregoing problem, a firth aspect of this application provides a wireless network access method, including the following steps:
sending access request information, where the access request information is used to indicate that a terminal requests to access a first wireless network of an access point; receiving a first IP address sent by the access point according to the access request information; accessing the first wireless network of the access point according to the first IP address; sending request information of acquiring a service set identifier and an access password, where the request information of acquiring the service set identifier and the access password is used to indicate that the terminal requests to acquire the service set identifier and the access password for accessing a second wireless network of the access point; receiving the service set identifier and the access password that are for accessing the second wireless network and sent by the access point, where when the access point determines the terminal as a target terminal according to the access request information or the request information of acquiring the service set identifier and the access password, the service set identifier and the access password for accessing the second wireless network are a service set identifier and an access password that are sent to the terminal, whereby the target terminal is the terminal that is the first one for accessing the first wireless network; requesting to connect to the second wireless network by using the service set identifier and the access password for accessing the second wireless network; and receiving a second IP address sent by the access point, and accessing the second wireless network according to the second IP address, where when the access point determines that the service set identifier and the access password of the second wireless network match the service set identifier and the access password that are received by the access point, the second IP address is an IP address allocated to the terminal.

### excised

With reference to the forth aspect, in a first possible implementation manner of the forth aspect of this application, after the step of receiving a second IP address sent by the access point, and accessing the second wireless network according to the second IP address, the method further includes: deleting a service set identifier of the first wireless network.

In the foregoing solution, an access point sets two wireless networks that have different access permissions, and uses a first wireless network that has a lower-order access permission as a platform for accessing a second wireless network that has a higher-order access permission. A service set identifier and an access password of the second wireless network are sent to a terminal only when the current terminal is determined, according to request information of acquiring the service set identifier and the access password for accessing the second wireless network, as a terminal that is the first one for accessing the first wireless network, so that the terminal automatically accesses the second wireless network. Because a user does not need to manually enter the access password, an access password with high complexity may be set, or a binary password that cannot be guessed may be set, which improves network security and is more convenient for the user to use.

### BRIEF DESCRIPTION OF DRAWINGS

FIG. 1 is a schematic structural diagram of an implementation manner of a wireless network access system according to this application;
FIG. 2 is a schematic structural diagram of an implementation manner of a wireless network access apparatus according to this application;
FIG. 3 is a schematic structural diagram of an implementation manner of a terminal according to this application;
FIG. 4 is a flowchart of an implementation manner of a wireless network access method according to this application;
FIG. 5 is a flowchart of a second implementation manner of a wireless network access method according to this application;
FIG. 6 is a flowchart of a third implementation manner of a wireless network access method according to this application;
FIG. 7 is a flowchart of a fourth implementation manner of a wireless network access method according to this application;
FIG. 8 is a schematic structural diagram of another implementation manner of a wireless network access apparatus according to this application; and
FIG. 9 is a schematic structural diagram of another implementation manner of a terminal according to this application.

### DESCRIPTION OF EMBODIMENTS

In the following description, to illustrate rather than limit, specific details such as a particular system structure, an interface, and a technology are provided to make a thorough understanding of this application. However, a person skilled in the art should know that this application may be practiced in other implementation manners without these specific details. In other cases, detailed descriptions of well-known apparatuses, circuits, and methods are omitted, so that this application is described without being obscured by unnecessary details.

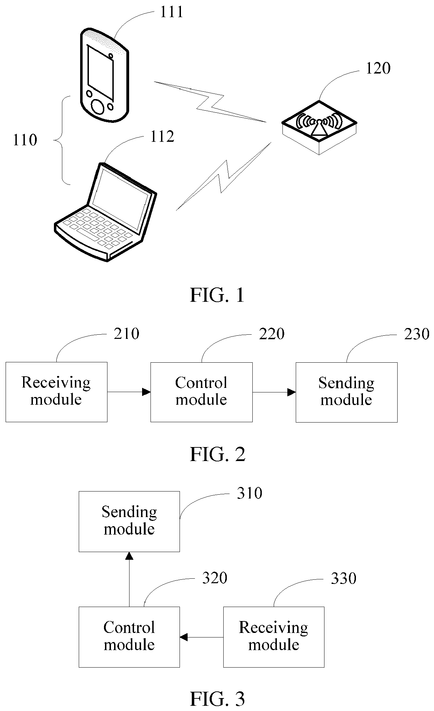

Referring to FIG. 1, FIG. 1 is a schematic structural diagram of an implementation manner of a wireless network access system according to this application. The wireless network access system in this implementation manner includes a terminal 110 and a wireless network access apparatus 120. The terminal 110 may perform wireless communication with the wireless network access apparatus 120. The terminal 110 may be a mobile phone 111 or may be a notebook computer 112, and the wireless network access apparatus 120 is an access point.

The wireless network access apparatus 120 has two service set identifiers (Service Set Identifier, SSID): an SSID1 and an SSID2. The SSID1 is an unencrypted public wireless network, where any terminal 110 can access the SSID1. However, the SSID1 does not have an actual network switching function and cannot access a home local area network or a core network. The SSID2 is a wireless network that can be accessed only by using a correct pre-shared key (Pre-Shared Key, PSK), that is, an access password. The SSID2 has an actual network switching function and can access a home local area network and a core network. After it is detected that the terminal 110 successfully accesses the SSID1, the terminal 110 automatically requests, to the wireless network access apparatus 120, to access the SSID2 by running network access software.

When the wireless network access apparatus 120 is powered on, a user may access the core network by using the wireless network access apparatus 120. In this case, the user expects a terminal that accesses the wireless network access apparatus 120 to be the first terminal 111, searches, by using a "Wi-Fi settings" operation interface of the terminal 111, for currently available wireless networks, and selects an SSID1 from a service set identifier list of the currently available wireless networks, so as to request, to the wireless network access apparatus 120, to access a first wireless network. Access request information includes a MAC address of the terminal.

The wireless network access apparatus 120 receives the access request information that is of requesting to access the first wireless network and sent by the first terminal 111, allocates a first IP address to the first terminal 111 according to the access request information, and sends the first IP address to the first terminal 111 by using the first wireless network, so that the first terminal 111 accesses the first wireless network according to the first IP address.

When the first terminal 111 successfully accesses the first wireless network, the first terminal 111 performs network communication with the wireless network access apparatus 120 and sends request information of acquiring a service set identifier and an access password to the wireless network access apparatus 120, so as to request to acquire the service set identifier and the access password for accessing a second wireless network. The wireless network access apparatus 120 receives, by using the first wireless network, the request information that is of acquiring the service set identifier and the access password and sent by the first terminal 111, and determines, according to the access request information or the request information of acquiring the service set identifier and the access password, whether the current terminal is a terminal that is the first one for accessing the first wireless network. When it is determined that the current terminal is the terminal that is the first one for accessing the first wireless network, the wireless network access apparatus 120 determines the terminal as a target terminal and sends the service set identifier SSID2 and the access password of the encrypted second wireless network to the first terminal 111 by using the first wireless network. The target terminal is the terminal that is the first one for accessing the first wireless network, and the access password sent by the wireless network access apparatus 120 may be an extremely complex combination of English letters and digits or may be a binary password, thereby improving network security.

It can be understood that in this implementation manner, the wireless network access apparatus 120 may determine, according to a time at which the access request information sent by the terminal is received or a time at which the request information that is of acquiring the service set identifier and the access password and sent by the terminal is received, whether the terminal is the terminal that is the first one for accessing the first wireless network, so as to determine the target terminal; or may obtain, by parsing the access request information, a sending time included in the access request information or obtain, by parsing the request information of acquiring the service set identifier and the access password, a sending time included in the request information of acquiring the service set identifier and the access password, to determine, according to the sending time, whether the terminal is the terminal that is the first one for accessing the first wireless network, so as to determine the target terminal; or may record a MAC address that is of a terminal and included in the first received piece of access request information, and compare the MAC address that is of the terminal and included in the request information of acquiring the service set identifier and the access password with the MAC address that is of the terminal and included in the access request information, to determine whether the terminal is the terminal that is the first one for accessing the first wireless network, so as to determine the target terminal. In another implementation manner, the wireless network access apparatus 120 may also determine in another manner whether the terminal is the target terminal.

When the first terminal 111 receives the service set identifier SSID2 and the access password of the second wireless network, the first terminal 111 performs network communication with the wireless network access apparatus 120 and requests to connect to the second wireless network by using the service set identifier SSID2 and the access password of the second wireless network. When it is determined that both an allocated service set identifier and access password of the second wireless network match the received service set identifier SSID2 and access password, that is, when the received service set identifier SSID2 is the same as the allocated service set identifier SSID2 of the second wireless network and the received access password is the same as the allocated access password of the second wireless network, the wireless network access apparatus 120 allocates a second IP address to the first terminal 111 and sends the second IP address to the terminal 111 by using the second wireless network, so that the first terminal 111 accesses the second wireless network according to the second IP address, and the first terminal 111 accesses the core network by using the second wireless network. After successfully accessing the second wireless network according to the second IP address, the first mobile terminal 111 deletes the service set identifier SSID1 of the first wireless network. Because the first wireless network does not have the actual network switching function, the core network cannot be accessed. The terminal deletes the SSID1 to avoid a case in which the terminal cannot acquire a network service due to a network connection failure that is caused because the terminal is unexpectedly and automatically connected to the SSID1 when the terminal is disconnected from the SSID2.

When the second terminal 112 successfully accesses the first wireless network in a manner of the first terminal 111, the second terminal 112 performs network communication with the wireless network access apparatus 120 and requests to acquire the service set identifier SSID2 and the access password of the second wireless network. The wireless network access apparatus 120 receives request information that is of acquiring the service set identifier and the access password and for requesting to access the second wireless network and is sent by the second terminal 112, determines, according to access request information or the request information of acquiring the service set identifier and the access password, that the second terminal 112 is not a target terminal, and does not respond to the request information that is of acquiring the service set identifier and the access password and sent by the second terminal 112, thereby preventing the second terminal 112 from accessing the core network by using the second wireless network. The wireless network access apparatus 120 responds only to request information that is of acquiring a service set identifier and an access password and sent by the terminal that is the first one for successfully accessing the first wireless network.

When a user of the first terminal 111 is an administrator, which is a case expected by the user, the wireless network access apparatus 120 is already accessed by a correct end user and can continue to work, so as to provide a network service to the first terminal 111.

However, when the user of the first terminal 111 is a visitor and a user of the second terminal 112 is an administrator, which is case not expected by the user, the wireless network access apparatus 120 is already accessed by an incorrect end user. The wireless network access apparatus 120 allows only the first terminal 111 that is the first one for accessing the first wireless network to access the second wireless network so as to access the core network by using the second wireless network. However, in this case, the user that is of the second terminal 112 and is an administrator cannot successfully access the second wireless network. In this case, the user that is of the second terminal 112 and is an administrator needs to reset the wireless network access apparatus 120 to clear all data and restore the wireless network access apparatus 120 to an initial state, so as to re-access the first wireless network until the second wireless network is successfully accessed, that is, to become the terminal that is the first one for accessing the first wireless network.

The service set identifier SSID2 of the second wireless network may be set as broadcast or may be set as hidden.

When the SSID2 is set as broadcast, another user may use a network attack tool to obtain the SSID2 by means of scanning, attempt to attack the network, try to crack the password, access, after obtaining a correct access password, the wireless network access apparatus, and access the core network. In this case, after receiving data of attempting to attack, the wireless network access apparatus 120 needs to allocate bandwidth to process the data of attempting to attack, which reduces a rate in processing data submitted by an authorized user, thereby causing poorer network performance. When the wireless network access apparatus 120 does not respond to any access request because of the ceaseless received data of attempting to attack, that the authorized user cannot normally access the network in this period of time is caused.

When the SSID2 is set as hidden, the following can be prevented to further enhance network security: Another user uses a network attack tool to obtain the SSID2 by means of scanning, attempts to attack the network to crack the password, and accesses the second wireless network after obtaining the correct access password. In the foregoing solution, two wireless networks that have different access permissions are set, and a first wireless network that has a lower-order access permission is used as a platform for accessing a second wireless network that has a higher-order access permission. A service set identifier and an access password of the second wireless network are sent to a terminal only when the current terminal is determined, according to request information of requesting to access the first wireless network or request information of acquiring the service set identifier and the access password for accessing the second wireless network, as a terminal that is the first one for accessing the first wireless network, so that the terminal accesses the second wireless network. Because a user does not need to manually enter the access password, an access password with high complexity may be set, or a binary password that cannot be guessed may be set, which improves network security and is more convenient for the user to use.

Referring to FIG. 2, FIG. 2 is a schematic structural diagram of an implementation manner of a wireless network access apparatus according to this application. The wireless network access apparatus in this implementation manner is an access point, including a receiving module 210, a control module 220, and a sending module 230.

The wireless network access apparatus has two service set identifiers (Service Set Identifier, SSID): an SSID1 and an SSID2. The SSID1 is an unencrypted public wireless network, where any terminal can access the SSID1. However, the SSID1 does not have an actual network switching function and cannot access a home local area network or a core network. The SSID2 is a wireless network that can be accessed only by using a correct pre-shared key (Pre-Shared Key, PSK), that is, an access password. The SSID2 has an actual network switching function and can access a home local area network and a core network. After it is detected that a terminal successfully accesses the SSID1, the terminal automatically requests, to the wireless network access apparatus 120, to access the SSID2 by running network access software.

The receiving module 210 is configured to receive, by using a first wireless network, access request information sent by a terminal, where the access request information is used to indicate that the terminal requests to access the first wireless network.

The receiving module 210 is further configured to receive, by using the first wireless network, request information that is of acquiring a service set identifier and an access password of a second wireless network and is sent by the terminal, where the request information of acquiring the service set identifier and the access password of the second wireless network is used to indicate that the terminal requests to acquire the service set identifier and the access password for accessing the second wireless network.

The receiving module 210 is further configured to receive, by using the first wireless network, a service set identifier and an access password that are of the second wireless network and sent by the terminal.

The control module 220 is configured to allocate a first IP address to the terminal according to the access request information received by the receiving module.

The control module 220 is further configured to: when the terminal is determined as a target terminal according to the access request information received by the receiving module or the request information, received by the receiving module, of acquiring the service set identifier and the access password of the second wireless network, allocate, to the terminal, the service set identifier and the access password for accessing the second wireless network.

The control module 220 is further configured to: when it is determined that the service set identifier and the access password of the second wireless network match the received service set identifier and access password, allocate a second IP address to the terminal.

The sending module 230 is configured to send, to the terminal by using the first wireless network, the first IP address allocated by the control module, so that the terminal accesses the first wireless network according to the first IP address.

The sending module 230 is further configured to send, to the terminal by using the first wireless network, the service set identifier and the access password that are of the second wireless network and allocated by the control module.

The sending module 230 is further configured to send, to the terminal by using the second wireless network, the second IP address allocated by the control module, so that the terminal accesses the second wireless network according to the second IP address. Specifically, after the access point is powered on and works normally, a user searches, by using a "Wi-Fi settings" operation interface of the terminal, for currently available wireless networks, and selects the SSID1 from a service set identifier list of the currently available wireless networks, so as to request to access the first wireless network. The receiving module 210 receives the access request information that is of requesting to access the first wireless network and sent by the terminal, where the access request information includes a MAC address of the terminal.

The receiving module 210 sends the access request information to the control module 220.

The control module 220 receives the access request information, allocates the first IP address to the terminal according to the access request information, and controls the sending module 230 to send the first IP address to the terminal by using the first wireless network, so that the terminal accesses the first wireless network according to the first IP address. At the same time when the control module 220 allocates the first IP address to the terminal, the control module 220 further records a MAC address of a terminal that is the first one for accessing the first wireless network.

When it is detected that the terminal has successfully accessed the first wireless network, the terminal performs network communication with the wireless network access apparatus, sends the request information of acquiring the service set identifier and the access password to the wireless network access apparatus, so as to request to acquire the service set identifier and the access password for accessing the second wireless network. The receiving module 210 receives the request information that is of requesting to acquire the service set identifier and the access password for accessing the second wireless network and is sent by the terminal, where the request information of acquiring the service set identifier and the access password includes the MAC address of the terminal.

The receiving module 210 sends the request information of acquiring the service set identifier and the access password to the control module 220.

The control module 220 receives the request information of acquiring the service set identifier and the access password and determines, according to the access request information or the request information of acquiring the service set identifier and the access password, whether the current terminal is the terminal that is the first one for accessing the first wireless network. When it is determined that the current terminal is the terminal that is the first one for accessing the first wireless network, the control module 220 determines the terminal as the target terminal and sends the service set identifier SSID2 and the access password of the encrypted second wireless network to the terminal by using the first wireless network. The target terminal is the terminal that is the first one for accessing the first wireless network, and the access password sent by the control module 220 may be an extremely complex combination of English letters and digits or may be a binary password, thereby improving network security.

It can be understood that in this implementation manner, the control module 220 may determine, according to a time at which the access request information sent by the terminal is received or a time at which the request information that is of acquiring the service set identifier and the access password and sent by the terminal is received, whether the terminal is the terminal that is the first one for accessing the first wireless network, so as to determine the target terminal; or may obtain, by parsing the access request information, a sending time included in the access request information or obtain, by parsing the request information of acquiring the service set identifier and the access password, a sending time included in the request information of acquiring the service set identifier and the access password, to determine, according to the sending time, whether the terminal is the terminal that is the first one for accessing the first wireless network, so as to determine the target terminal; or may record a MAC address that is of a terminal and included in the first received piece of access request information, and compare the MAC address that is of the terminal and included in the request information of acquiring the service set identifier and the access password with the MAC address that is of the terminal and included in the access request information, to determine whether the terminal is the terminal that is the first one for accessing the first wireless network, so as to determine the target terminal. In another implementation manner, the control module 220 may also determine in another manner whether the terminal is the target terminal.

When the terminal receives the service set identifier SSID2 and the access password of the second wireless network, the terminal performs network communication with the wireless network access apparatus and requests to connect to the second wireless network by using the service set identifier SSID2 and the access password of the second wireless network. When it is determined that both an allocated service set identifier SSID2 and access password of the second wireless network match the service set identifier SSID2 and the access password that are received by the receiving module 210, the control module 220 allocates the second IP address to the terminal, controls the sending module 230 to send the second IP address to the terminal by using the second wireless network, so that the terminal accesses the second wireless network according to the second IP address, and the terminal accesses the core network by using the second wireless network.

In the foregoing solution, two wireless networks that have different access permissions are set, and a first wireless network that has a lower-order access permission is used as a platform for accessing a second wireless network that has a higher-order access permission. A service set identifier and an access password of the second wireless network are sent to a terminal only when the current terminal is determined, according to request information of requesting to access the first wireless network or request information of acquiring the service set identifier and the access password for accessing the second wireless network, as a terminal that is the first one for accessing the first wireless network, so that the terminal accesses the second wireless network. Because a user does not need to manually enter the access password, an access password with high complexity may be set, or a binary password that cannot be guessed may be set, which improves network security and is more convenient for the user to use.

In another implementation manner, the control module 220 is further configured to: when the terminal is determined as the target terminal according to the access request information or the request information of acquiring the service set identifier and the access password, add the MAC address of the terminal to a name list that is allowed to access the second wireless network.

For example, when the current terminal is determined as the target terminal according to the access request information or the request information of acquiring the service set identifier and the access password, the control module 220 adds the MAC address of the terminal to the name list that is allowed to access the second wireless network, so that the terminal accesses the core network by using the second wireless network. The target terminal is the terminal that is the first one for accessing the first wireless network. The service set identifier SSID2 and the access password of the encrypted second wireless network are sent to the terminal by using the first wireless network only when the control module 220 determines, according to the access request information or the request information of acquiring the service set identifier and the access password, that the MAC address of the terminal is in the name list, so that the terminal is allowed to access the second wireless network.

In the foregoing solution, a MAC address of the terminal that is the first one for accessing the first wireless network is added to a whitelist to prevent another terminal that is not in the name list from accessing the second wireless network after obtaining the correct service set identifier SSID2 and access password in another manner, so that network security is further enhanced.

In another implementation manner, the control module 220 is further configured to hide the service set identifier of the second wireless network.

For example, when the apparatus is powered on, the control module 220 hides the service set identifier of the second wireless network, and the following is prevented to further enhance network security: Another user uses a network attack tool to obtain the SSID2 by means of scanning, attempts to attack the network to crack the password, and accesses the second wireless network after obtaining the correct access password.

In another implementation manner, the control module 220 is specifically configured to: when it is determined that a time at which the access request information is received falls within a preset time, send, to the terminal according to the access request information, the first IP address allocated by the access point to the terminal.

For example, when the access request information sent by the receiving module 210 is received, the control module 220 determines whether the time at which the access request information is received falls within the preset time. When it is determined that the time at which the access request information is received falls within the preset time, the control module 220 allocates the first IP address to the terminal according to the access request information, and controls the sending module 230 to send the first IP address to the terminal by using the first wireless network. When it is determined that the time at which the access request information is received is not within the preset time, the control module 220 further determines whether a reset command is received. When the reset command is received, the control module 220 clears all data to restore to an initial state, and waits for processing the received access request information. When the control module 220 determines that the time at which the access request information is received is not within the preset time and the reset command is not received, the control module 220 does not perform any processing on the received access request information.

In the foregoing solution, a preset time within which the access request information is responded to is set, so that the user can access the first wireless network and access the second wireless network by using the first wireless network only within the preset time, thereby further improving network security.

Referring to FIG. 3, FIG. 3 is a schematic structural diagram of an implementation manner of a terminal according to this application. The terminal in this implementation manner includes a sending module 310, a control module 320, and a receiving module 330.

The sending module 310 is configured to send access request information, where the access request information is used to indicate that the terminal requests to access a first wireless network of an access point.

The sending module 310 is further configured to send request information of acquiring a service set identifier and an access password, where the request information of acquiring the service set identifier and the access password is used to indicate that the terminal requests to acquire the service set identifier and the access password for accessing a second wireless network of the access point.

The sending module 310 sends the access request information and the request information of acquiring the service set identifier and the access password to the access point.

The receiving module 330 is configured to receive a first IP address sent by the access point according to the access request information.

The receiving module 330 is further configured to receive the service set identifier and the access password that are of the second wireless network and sent by the access point, where when the access point determines the terminal as a target terminal according to the access request information or the request information of acquiring the service set identifier and the access password, the service set identifier and the access password of the second wireless network are a service set identifier and an access password that are sent to the terminal.

The receiving module 330 is further configured to receive a second IP address sent by the access point, where when the access point determines that the service set identifier and the access password of the second wireless network match the received service set identifier and access password, the second IP address is an IP address allocated to the terminal.

The receiving module 330 sends the first IP address, the service set identifier and the access password for accessing the second wireless network, and the second IP address to the control module 320.

The control module 320 is configured to receive the first IP address and access the first wireless network of the access point according to the first IP address.

The control module 320 is further configured to receive the service set identifier and the access password of the second wireless network and request to connect to the second wireless network by using the service set identifier and the access password of the second wireless network.

The control module 320 is further configured to receive the second IP address and access the second wireless network according to the second IP address.

Specifically, when a user searches, by using a "Wi-Fi settings" operation interface of the terminal, for currently available wireless networks, and selects an SSID1 from a service set identifier list of the currently available wireless networks, so as to request to access the first wireless network, the control module 320 controls the sending module 310 to send the access request information to the access point to request to access the first wireless network of the access point. The access request information includes a MAC address of the terminal.

When the receiving module 330 receives, by using the first wireless network, the first IP address that is sent by the access point according to the access request information, the control module 320 accesses the first wireless network according to the first IP address received by the receiving module 330.

When the control module 320 determines that the terminal has successfully accessed the first wireless network, the control module 320 performs network communication with the access point and sends the request information of acquiring the service set identifier and the access password to the access point by using the sending module 310 to request to acquire the service set identifier and the access password for accessing the second wireless network of the access point, where the request information of acquiring the service set identifier and the access password includes the MAC address of the terminal.

When the access point determines the current terminal as the target terminal according to the access request information or the request information of acquiring the service set identifier and the access password, and sends the service set identifier SSID2 and the access password of the encrypted second wireless network to the terminal, the receiving module 330 performs network communication with the access point and receives, by using the first wireless network, the service set identifier SSID2 and the access password that are of the second wireless network and sent by the access point. The target terminal is the terminal that is the first one for accessing the first wireless network. The receiving module 330 sends the service set identifier SSID2 and the access password of the second wireless network to the control module 320.

The control module 320 performs network communication with the access point, requests to connect to the second wireless network by using the service set identifier SSID2 and the access password of the second wireless network, and controls the sending module 310 to send the service set identifier SSID2 and the access password of the second wireless network to the access point to request to access the second wireless network.

When the access point determines that both the service set identifier and the access password of the second wireless network match the received service set identifier SSID2 and access password and sends the second IP address to the terminal, the receiving module 330 receives, by using the second wireless network, the second IP address sent by the access point and sends the second IP address to the control module 330, so that the control module 320 accesses the second wireless network according to the second IP address, so as to access a core network by using the second wireless network.

In the foregoing solution, the terminal accesses a second wireless network according to a service set identifier SSID2 and an access password of the second wireless network. Because a user does not need to manually enter the access password, an access password with high complexity may be set, or a binary password that cannot be guessed may be set, which improves network security and is more convenient for the user to use.

In another implementation manner, the control module 320 is further configured to: after the terminal accesses the second wireless network according to the second IP address, delete the service set identifier of the first wireless network.

After it is determined that the terminal successfully accesses the second wireless network according to the second IP address, the control module 320 deletes the service set identifier SSID1 of the first wireless network from the service set identifier list of the currently available wireless networks.

In the foregoing solution, the terminal accesses a second wireless network according to a service set identifier SSID2 and an access password of the second wireless network. Because a user does not need to manually enter the access password, an access password with high complexity may be set, or the binary password that cannot be guessed may be set, which improves network security and is more convenient for the user to use.

Because the first wireless network does not have an actual network switching function, the core network cannot be accessed. The terminal deletes the SSID1 to avoid a case in which the terminal cannot acquire a network service due to a network connection failure that is caused because the terminal is automatically connected to the SSID1.

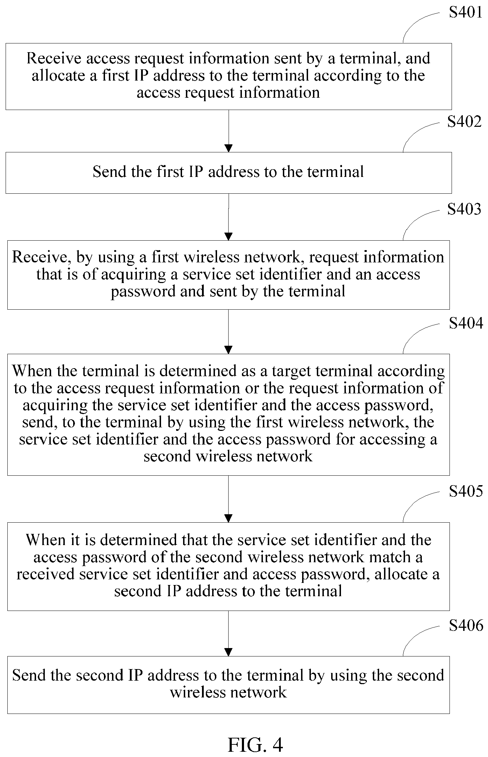

Referring to FIG. 4, FIG. 4 is a flowchart of an implementation manner of a wireless network access method according to this application. This implementation manner is described from a perspective of a wireless network access apparatus, where the wireless network access apparatus is generally an access point and may be a switch or a router. This implementation manner includes the following steps:

S401. Receive, by using a first wireless network, access request information sent by a terminal, and allocate a first IP address to the terminal according to the access request information, where the access request information is used to indicate that the terminal requests to access the first wireless network.

After the access point is powered on and works normally, a user searches, by using a "Wi-Fi settings" operation interface of the terminal, for currently available wireless networks, and selects an SSID1 from a service set identifier list of the currently available wireless networks, so as to request to access the first wireless network. The access point receives the access request information that is of requesting to access the first wireless network and sent by the terminal, and allocates the first IP address to the terminal according to the access request information. The access request information includes a MAC address of the terminal. At the same time when the access point allocates the first IP address to the terminal, the access point further records a MAC address of the terminal that is the first one for accessing the first wireless network.

S402. Send the first IP address to the terminal by using the first wireless network, so that the terminal accesses the first wireless network according to the first IP address.

The access point sends the first IP address to the terminal by using the first wireless network, so that the terminal accesses the first wireless network according to the first IP address.

S403. Receive, by using the first wireless network, request information that is of acquiring a service set identifier and an access password and sent by the terminal, where the request information of acquiring the service set identifier and the access password is used to indicate that the terminal requests to acquire the service set identifier and the access password for accessing a second wireless network.

When it is detected that the terminal has successfully accessed the first wireless network, the terminal performs network communication with the access point, sends the request information of acquiring the service set identifier and the access password to the access point, so as to request to acquire the service set identifier and the access password for accessing the second wireless network. The access point receives, by using the first wireless network, the request information that is of requesting to acquire the service set identifier and the access password for accessing the second wireless network and is sent by the terminal, where the request information of acquiring the service set identifier and the access password includes the MAC address of the terminal, and the request information of acquiring the service set identifier and the access password is used to indicate that the terminal requests to acquire the service set identifier and the access password for accessing the second wireless network.

S404. When the terminal is determined as a target terminal according to the access request information or the request information of acquiring the service set identifier and the access password, send, to the terminal by using the first wireless network, the service set identifier and the access password for accessing the second wireless network, and send the service set identifier and the access password of the second wireless network to the terminal by using the first wireless network.

The access point determines, according to the access request information or the request information of acquiring the service set identifier and the access password, whether the terminal is the target terminal. When the current terminal is determined as the terminal that is the first one for accessing the first wireless network, the access point determines the terminal as the target terminal and sends the service set identifier SSID2 and the access password of the encrypted second wireless network to the terminal by using the first wireless network. The target terminal is the terminal that is the first one for accessing the first wireless network, and the access password sent by the access point may be an extremely complex combination of English letters and digits or may be a binary password, thereby improving network security. The request information of acquiring the service set identifier and the access password includes the MAC address of the terminal.

It can be understood that in this implementation manner, the access point may determine, according to a time at which the access request information sent by the terminal is received or a time at which the request information that is of acquiring the service set identifier and the access password and sent by the terminal is received, whether the terminal is the terminal that is the first one for accessing the first wireless network, so as to determine the target terminal; or may obtain, by parsing the access request information, a sending time included in the access request information or obtain, by parsing the request information of acquiring the service set identifier and the access password, a sending time included in the request information of acquiring the service set identifier and the access password, to determine, according to the sending time, whether the terminal is the terminal that is the first one for accessing the first wireless network, so as to determine the target terminal; or may record a MAC address that is of a terminal and included in the first received piece of access request information, and compare the MAC address that is of the terminal and included in the request information of acquiring the service set identifier and the access password with the MAC address that is of the terminal and included in the access request information, to determine whether the terminal is the terminal that is the first one for accessing the first wireless network, so as to determine the target terminal. In another implementation manner, the access point may also determine in another manner whether the terminal is the target terminal.

S405. When it is determined that the allocated service set identifier and access password of the second wireless network match a received service set identifier and access password, that is, when the received service set identifier SSID is the same as the allocated service set identifier SSID of the second wireless network and the received access password is the same as the allocated access password of the second wireless network, allocate a second IP address to the terminal.

When the terminal receives the service set identifier SSID2 and the access password of the second wireless network, the terminal performs network communication with the access point and requests to connect to the second wireless network by using the service set identifier SSID2 and the access password of the second wireless network. The access point compares the received service set identifier SSID2 and access password with the allocated service set identifier SSID2 and access password of the second wireless network, and when it is determined that both the received service set identifier SSID2 and access password match the allocated service set identifier SSID2 and access password of the second wireless network, that is, when the received service set identifier SSID2 is the same as the allocated service set identifier SSID2 of the second wireless network and the received access password is the same as the allocated access password of the second wireless network, allocates the second IP address to the terminal.

S406. Send the second IP address to the terminal by using the second wireless network, so that the terminal accesses the second wireless network according to the second IP address.

The access point sends the second IP address to the terminal by using the second wireless network, so that the terminal accesses the second wireless network according to the second IP address, so that the terminal accesses a core network by using the second wireless network.

In the foregoing solution, an access point sets two wireless networks that have different access permissions, and uses a first wireless network that has a lower-order access permission as a platform for accessing a second wireless network that has a higher-order access permission. A service set identifier and an access password of the second wireless network are sent to a terminal only when the current terminal is determined, according to request information of requesting to access the first wireless network or request information of acquiring the service set identifier and the access password for accessing the second wireless network, as a terminal that is the first one for accessing the first wireless network, so that the terminal accesses the second wireless network. Because a user does not need to manually enter the access password, an access password with high complexity may be set, or a binary password that cannot be guessed may be set, which improves network security and is more convenient for the user to use.

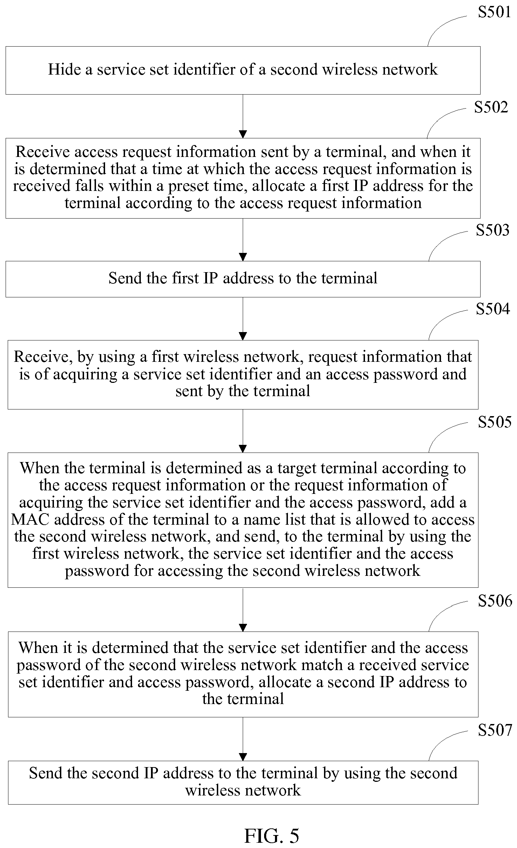

Referring to FIG. 5, FIG. 5 is a flowchart of a second implementation manner of a wireless network access method according to this application. This implementation manner is described from a perspective of a wireless network access apparatus, where the wireless network access apparatus is generally an access point and may be a switch or a router. This implementation manner includes the following steps:

S501. Hide a service set identifier of a second wireless network.

When the access point is powered on, the access point hides the service set identifier of the second wireless network, and the following is prevented: Another user uses a network attack tool to obtain the SSID2 by means of scanning, attempts to attack the network to crack a password, and accesses the second wireless network after obtaining a correct access password.

S502. Receive access request information sent by a terminal, and when it is determined that a time at which the access request information is received falls within a preset time, allocate a first IP address to the terminal according to the access request information, where the access request information is used to indicate that the terminal requests to access a first wireless network.

When the access point works normally, a user searches, by using a "Wi-Fi settings" operation interface of the terminal, for currently available wireless networks, and selects an SSID1 from a service set identifier list of the currently available wireless networks, so as to request to access the first wireless network. The access point receives the access request information that is of requesting to access the first wireless network and sent by the terminal, and determines whether the time at which the access request information is received falls within the preset time. When it is determined that the time at which the access request information is received falls within the preset time, the access point allocates the first IP address to the terminal according to the access request information, and sends the first IP address to the terminal by using the first wireless network, so that the terminal accesses the first wireless network according to the first IP address. When it is determined that the time at which the access request information is received is not within the preset time, the access point further determines whether a reset command is received. When the reset command is received, the access point clears all data to restore to an initial state, and waits for receiving access request information again. When the access point determines that the time at which the access request information is received is not within the preset time and the reset command is not received, the access point does not perform any processing on the received access request information. The access request information includes a MAC address of the terminal. At the same time when the access point allocates the first IP address to the terminal, the access point further records a MAC address of the terminal that is the first one for accessing the first wireless network.

Steps S503 to S504 in this implementation manner are the same as steps S402 to S403 in the foregoing implementation manner. Refer to steps S402 to S403 and related description about the steps, which are not described herein again.

S505. Receive second request information; when the terminal is determined as a target terminal according to the access request information or the request information of acquiring the service set identifier and the access password, determine, according to a MAC address in the second request information, whether the terminal is the terminal that is the first one for accessing the first wireless network; and if the terminal is the terminal that is the first one for accessing the first wireless network, add a MAC address of the terminal to a name list that is allowed to access the second wireless network, and send the service set identifier and the access password of the second wireless network to the terminal by using the first wireless network.

The access point determines, according to the access request information or the request information of acquiring the service set identifier and the access password, whether the terminal is the target terminal. When the current terminal is determined as the terminal that is the first one for accessing the first wireless network, the access point determines the terminal as the target terminal. The access point adds the MAC address of the terminal to the name list that is allowed to access the second wireless network. The service set identifier SSID2 and the access password of the encrypted second wireless network are sent to the terminal by using the first wireless network only when the access point determines, according to the access request information or the request information of acquiring the service set identifier and the access password, that the MAC address of the terminal is in the name list. The target terminal is the terminal that is the first one for accessing the first wireless network, and the access password sent by the access point may be an extremely complex combination of English letters and digits or may be a binary password, thereby improving network security.

It can be understood that in this implementation manner, the access point may determine, according to the time at which the access request information sent by the terminal is received or a time at which the request information that is of acquiring the service set identifier and the access password and sent by the terminal is received, whether the terminal is the terminal that is the first one for accessing the first wireless network, so as to determine the target terminal; or may obtain, by parsing the access request information, a sending time included in the access request information or obtain, by parsing the request information of acquiring the service set identifier and the access password, a sending time included in the request information of acquiring the service set identifier and the access password, to determine, according to the sending time, whether the terminal is the terminal that is the first one for accessing the first wireless network, so as to determine the target terminal; or may record a MAC address that is of a terminal and included in the first received piece of access request information, and compare the MAC address that is of the terminal and included in the request information of acquiring the service set identifier and the access password with the MAC address that is of the terminal and included in the access request information, to determine whether the terminal is the terminal that is the first one for accessing the first wireless network, so as to determine the target terminal. In another implementation manner, the access point may also determine in another manner whether the terminal is the target terminal. When it is detected that the terminal has successfully accessed the first wireless network, the terminal performs network communication, by running network access software, with the wireless network access apparatus and automatically requests to access the second wireless network. The access point receives the second request information that is of requesting to access the second wireless network and sent by the terminal, and compares the MAC address in the second request information with the MAC address of the terminal that is the first one for accessing the first wireless network, to determine whether the current terminal is the terminal that is the first one for accessing the first wireless network. When it is determined that the terminal is the terminal that is the first one for accessing the first wireless network, the access point adds the MAC address of the terminal to the name list that is allowed to access the second wireless network and sends the service set identifier SSID2 and the access password of the encrypted second wireless network to the terminal by using the first wireless network. The access password sent by the access point may be an extremely complex combination of English letters and digits or may be a binary password, thereby improving network security. The second request information includes the MAC address of the terminal.

It can be understood that the network access software running in the terminal may be installed when the terminal 110 is delivered from a factory, or may be downloaded from a specified website and installed before the terminal 110 accesses the first network, or may be downloaded, by using a browser, from the wireless network access apparatus and installed after the terminal accesses the first wireless network. The access point may record only the MAC address of the terminal that is the first one for accessing the first wireless network, compare the MAC address in the second request information with the MAC address of the first terminal that accesses the first wireless network, to determine whether the terminal is the terminal that is the first one for accessing the first wireless network, or may determine, by using the MAC address of the terminal and a time at which the first request information sent by the terminal is received, whether the terminal is the terminal that is the first one for accessing the first wireless network.

Steps S506 to S507 in this implementation manner are the same as steps S405 to S406 in the foregoing implementation manner. Refer to steps S405 to S406 and related description about the steps, which are not described herein again.

In the foregoing solution, a service set identifier of a second wireless network is hidden, so that the following can be prevented to further enhance network security: Another user uses a network attack tool to obtain the SSID2 by means of scanning, attempts to attack the network to crack a password, and accesses the second wireless network after obtaining a correct access password. A preset time within which an access point responds to access request information is set, so that a user can access a first wireless network and access the second wireless network by using the first wireless network only within the preset time, thereby further improving network security.

A MAC address of the terminal that is the first one for accessing the first wireless network is added to a whitelist to prevent another terminal that is not in the name list from accessing the second wireless network after obtaining the correct access password in another manner, thereby further enhancing network security.

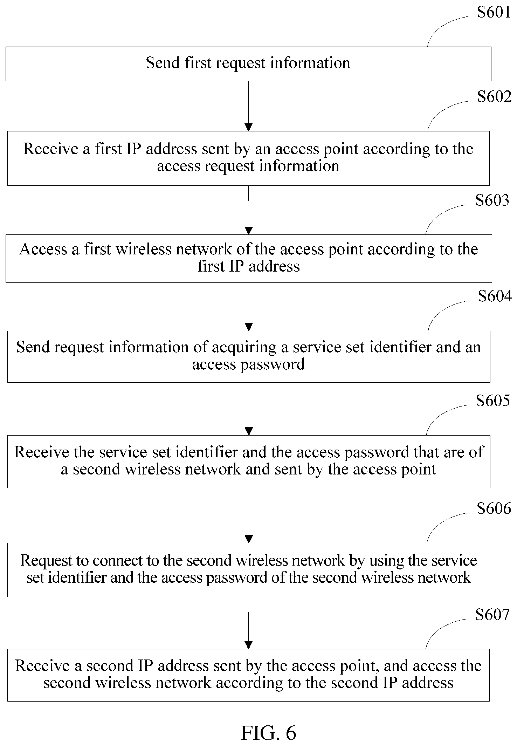

Referring to FIG. 6, FIG. 6 is a flowchart of a third implementation manner of a wireless network access method according to this application. This implementation manner is described from a perspective of a terminal, where the terminal may be a mobile terminal such as a mobile phone or a notebook computer. This implementation manner includes the following steps:

S601. Send access request information, where the access request information is used to indicate that the terminal requests to access a first wireless network of an access point.

After the access point is powered on and works normally, a user searches, by using a "Wi-Fi settings" operation interface of the terminal, for currently available wireless networks, and selects an SSID1 from a service set identifier list of the currently available wireless networks, so as to request to access the first wireless network. The terminal sends the access request information to the access point to request to access the first wireless network of the access point. The access request information includes a MAC address of the terminal.

S602. Receive a first IP address sent by the access point according to the access request information.

The terminal receives, by using the first wireless network, the first IP address sent by the access point according to the access request information.

S603. Access the first wireless network of the access point according to the first IP address.

The terminal accesses the first wireless network according to the received first IP address.

S604. Send request information of acquiring a service set identifier and an access password, where the request information of acquiring the service set identifier and the access password is used to indicate that the terminal requests to acquire the service set identifier and the access password for accessing a second wireless network of the access point.

When the terminal determines that the terminal has accessed the first wireless network, the terminal performs network communication with the access point and sends the request information of acquiring the service set identifier and the access password to the access point to request to acquire the service set identifier and the access password for accessing the second wireless network of the access point, where the request information of acquiring the service set identifier and the access password includes the MAC address of the terminal.

S605. Receive the service set identifier and the access password that are of the second wireless network and sent by the access point, where when the access point determines the terminal as a target terminal according to the access request information or the request information of acquiring the service set identifier and the access password, the service set identifier and the access password of the second wireless network are a service set identifier and an access password that are sent to the terminal.

When the access point determines the current terminal as the target terminal according to the access request information or the request information of acquiring the service set identifier and the access password, and sends the service set identifier SSID2 and the access password of the encrypted second wireless network to the terminal, the terminal performs network communication with the access point and receives, by using the first wireless network, the service set identifier SSID2 and the access password that are of the second wireless network and sent by the access point. The target terminal is the terminal that is the first one for accessing the first wireless network.

S606. Request to connect to the second wireless network by using the service set identifier and the access password of the second wireless network.

The terminal requests to connect to the second wireless network by using the service set identifier SSID2 and the access password of the second wireless network.

S607. Receive a second IP address sent by the access point, and access the second wireless network according to the second IP address, where when the access point determines that the service set identifier and the access password of the second wireless network match the received service set identifier and access password, that is, when the received service set identifier SSID2 is the same as the allocated service set identifier SSID2 of the second wireless network and the received access password is the same as the allocated access password of the second wireless network, the second IP address is an IP address allocated to the terminal.

When the access point determines that both the service set identifier and the access password of the second wireless network match the received service set identifier SSID2 and access password and sends the second IP address to the terminal, the terminal receives, by using the second wireless network, the second IP address sent by the access point and accesses the second wireless network according to the second IP address, so as to access a core network by using the second wireless network.

In the foregoing solution, a terminal accesses a second wireless network according to a service set identifier SSID2 and an access password of the second wireless network. Because a user does not need to manually enter the access password, an access password with high complexity may be set, or a binary password that cannot be guessed may be set, which improves network security and is more convenient for the user to use.

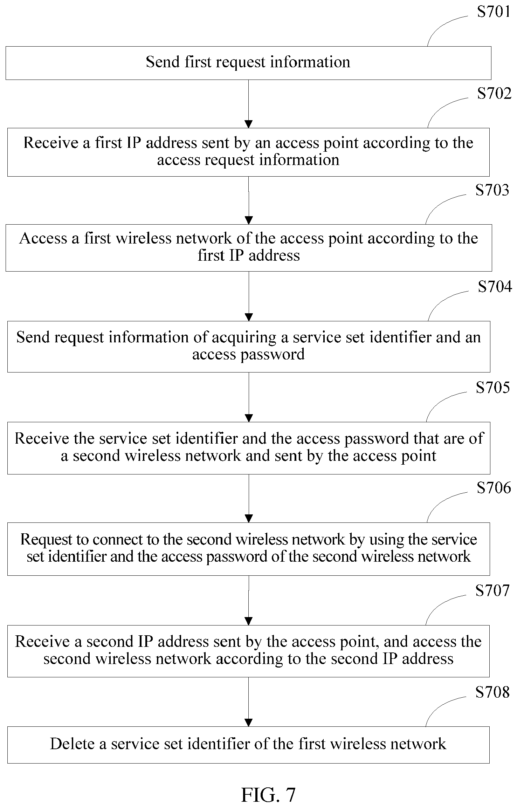

Referring to FIG. 7, FIG. 7 is a flowchart of a fourth implementation manner of a wireless network access method according to this application. Steps S701 to S107 in this implementation manner are the same as steps S601 to S607 in the third implementation manner. For details, refer to steps S601 to S607 and related description about the steps, which are not described herein again. A difference between this implementation manner and the third implementation manner lies in that after the step of receiving a second IP address sent by the access point, and accessing the second wireless network according to the second IP address, a step of deleting a service set identifier of the first wireless network is further included, that is, step S708 is further included.

S708. Delete a service set identifier of the first wireless network.

After successfully accessing the second wireless network according to the second IP address, the terminal deletes the service set identifier SSID1 of the first wireless network from a service set identifier list of currently available wireless networks.

In the foregoing solution, because the first wireless network does not have an actual network switching function, a core network cannot be accessed. The terminal deletes the SSID1 to avoid a case in which the terminal cannot acquire a network service due to a network connection failure that is caused because the terminal is unexpectedly and automatically connected to the SSID1 when the terminal is disconnected from the SSID2.

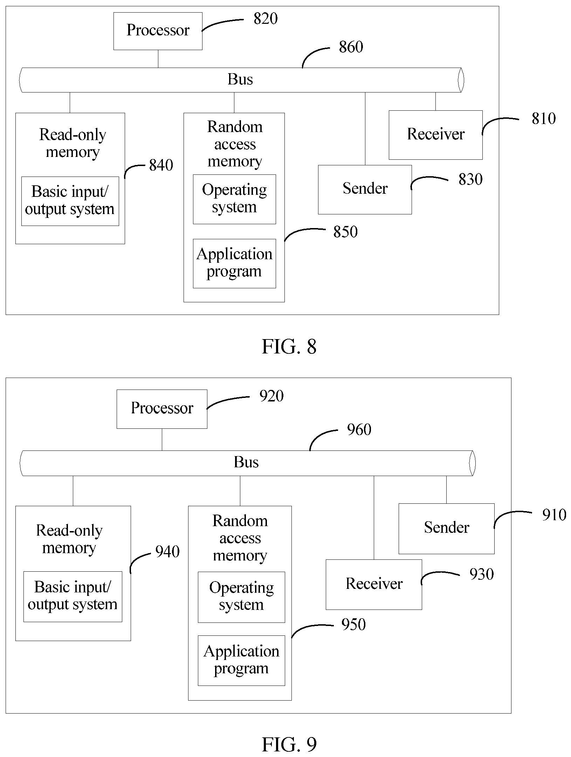

Referring to FIG. 8, FIG. 8 is a schematic structural diagram of another implementation manner of a network access apparatus according to this application. In this implementation manner, generally, the network access apparatus is an access point, where the wireless network access apparatus may be a switch or a router. In this implementation manner, the wireless network access apparatus includes a receiver 810, a processor 820, a sender 830, a read-only memory 840, a random access memory 850, and a bus 860.

The wireless network access apparatus has two service set identifiers (Service Set Identifier, SSID): an SSID1 and an SSID2. The SSID1 is an unencrypted public wireless network, where any terminal can access the SSID1. However, the SSID1 does not have an actual network switching function and cannot access a home local area network or a core network. The SSID2 is a wireless network that can be accessed only by using a correct pre-shared key (Pre-Shared Key, PSK), that is, an access password. The SSID2 has an actual network switching function and can access a home local area network and a core network. After it is detected that a terminal successfully accesses the SSID1, the terminal automatically requests, to the wireless network access apparatus 120, to access the SSID2 by running network access software.

The receiver 810 is configured to receive information sent by a terminal.

The processor 820 controls an operation of the network access apparatus, and the processor 820 may also be referred to as a CPU (Central Processing Unit, central processing unit). The processor 820 may be an integrated circuit chip and has a signal processing capability. The processor 820 may further be a general purpose processor, a digital signal processor (DSP), an application-specific integrated circuit (ASIC), a field programmable gate array (FPGA) or another programmable logic device, a discrete gate, a transistor logic device, or a discrete hardware component. The general purpose processor may be a microprocessor, or the processor may further be any conventional processor or the like.

The sender 830 is configured to send a signal to the terminal device.

A memory may include the read-only memory 840 and the random access memory 850, and provides an instruction and data to the processor 820. A part of the memory may further include a nonvolatile random access memory (NVRAM).

Components of the network access apparatus are coupled together by using the bus 860, where the bus 860 includes a data bus, and may further include a power bus, a control bus, a status signal bus, and the like. However, for clear description, buses are denoted as the bus 860 in the figure.

The memory stores the following elements: an executable module or a data structure, a subset of an executable module or a data structure, or an extended set of an executable module or a data structure.

Operation instructions include operation instructions that are used for implementing operations.

An operating system includes system programs that are used for implementing basic services and processing hardware-based tasks.

In this implementation manner of this application, the processor 820 executes, by invoking an operation instruction (the operation instruction may be stored in the operating system) stored in the memory, the following operations:

The receiver 810 is configured to receive, by using a first wireless network, access request information sent by the terminal, where the access request information is used to indicate that the terminal requests to access the first wireless network.

The receiver 810 is further configured to receive, by using the first wireless network, request information that is of acquiring a service set identifier and an access password of a second wireless network and is sent by the terminal, where the request information of acquiring the service set identifier and the access password of the second wireless network is used to indicate that the terminal requests to acquire the service set identifier and the access password for accessing the second wireless network. The receiver 810 sends the request information of acquiring the service set identifier and the access password to the processor 820.

The receiver 810 is further configured to receive, by using the first wireless network, a service set identifier and an access password that are of the second wireless network and sent by the terminal.

The processor 810 is configured to allocate a first IP address to the terminal according to the access request information received by the receiver.

The processor 810 is further configured to: when the terminal is determined as a target terminal according to the access request information received by the receiver or the request information, received by the receiver, of acquiring the service set identifier and the access password, allocate, to the terminal, the service set identifier and the access password for accessing the second wireless network. The processor 810 sends the service set identifier and the access password of the second wireless network to the sender 830.

The processor 810 is further configured to: when it is determined that the service set identifier and the access password of the second wireless network match the received service set identifier and access password, allocate a second IP address to the terminal. The processor 810 sends the second IP address to the sender 830.

The sender 830 is configured to send, to the terminal, the first IP address allocated by the processor, so that the terminal accesses the first wireless network according to the first IP address.

The sender 830 is further configured to receive the service set identifier and the access password of the second wireless network and send the service set identifier and the access password of the second wireless network to the terminal by using the first wireless network.

The sender 830 is further configured to send, to the terminal by using the second wireless network, the second IP address allocated by the processor, so that the terminal accesses the second wireless network according to the second IP address.

Optionally, the processor 820 is further configured to: when the terminal is determined as the target terminal according to the access request information or the request information of acquiring the service set identifier and the access password, add a MAC address of the terminal to a name list that is allowed to access the second wireless network.

Optionally, the processor 820 is further configured to hide the service set identifier of the second wireless network.

Optionally, when it is determined that a time at which the access request information is received falls within a preset time, the processor 820 is configured to send, to the terminal according to the access request information received by the receiver, the first IP address allocated by the access point to the terminal.

In the foregoing solution, two wireless networks that have different access permissions are set, and a first wireless network that has a lower-order access permission is used as a platform for accessing a second wireless network that has a higher-order access permission. A service set identifier and an access password of the second wireless network are sent to a terminal only when the current terminal is determined, according to access request information or request information of acquiring the service set identifier and the access password for accessing the second wireless network, as a terminal that is the first one for accessing the first wireless network, so that the terminal accesses the second wireless network. Because a user does not need to manually enter the access password, an access password with high complexity may be set, or a binary password that cannot be guessed may be set, which improves network security and is more convenient for the user to use.

Further, a MAC address of the terminal that is the first one for accessing the first wireless network is added to a whitelist to prevent another terminal that is not in the name list from accessing the second wireless network after obtaining a correct access password in another manner, thereby further enhancing network security.

Further, the service set identifier of the second wireless network is hidden to prevent another user from accessing the second wireless network by manually searching for the SSID2 when the correct access password is obtained, thereby further enhancing network security.

Further, a preset time within which the access request information is responded to is set, so that the user can access the first wireless network and access the second wireless network by using the first wireless network only within the preset time, thereby further improving network security.

Referring to FIG. 9, FIG. 9 is a schematic structural diagram of another implementation manner of a terminal according to this application. The terminal may be a mobile terminal such as a mobile phone or a notebook computer. The terminal in this implementation manner includes a sender 910, a processor 920, a receiver 930, a read-only memory 940, a random access memory 950, and a bus 960.

The sender 910 is configured to send information to an access point.

The processor 920 controls an operation of the terminal, and the processor 920 may also be referred to as a CPU (Central Processing Unit, central processing unit). The processor 920 may be an integrated circuit chip and has a signal processing capability. The processor 920 may further be a general purpose processor, a digital signal processor (DSP), an application-specific integrated circuit (ASIC), a field programmable gate array (FPGA) or another programmable logic device, a discrete gate, a transistor logic device, or a discrete hardware component. The general purpose processor may be a microprocessor, or the processor may further be any conventional processor or the like.

The receiver 930 is configured to receive information sent by the access point.

A memory may include the read-only memory 940 and the random access memory 950, and provides an instruction and data to the processor 920. A part of the memory may further include a nonvolatile random access memory (NVRAM).

Components of a network access apparatus are coupled together by using the bus 960, where the bus 960 includes a data bus, and may further include a power bus, a control bus, a status signal bus, and the like. However, for clear description, buses are denoted as the bus 960 in the figure.

The memory stores the following elements: an executable module or a data structure, a subset of an executable module or a data structure, or an extended set of an executable module or a data structure.

Operation instructions include operation instructions that are used for implementing operations.

An operating system includes system programs that are used for implementing basic services and processing hardware-based tasks.

In this implementation manner of this application, the processor 920 executes, by invoking an operation instruction (the operation instruction may be stored in the operating system) stored in the memory, the following operations:

The sender 910 is configured to send access request information, where the access request information is used to indicate that the terminal requests to access a first wireless network of an access point. The sender 910 is further configured to send request information of acquiring a service set identifier and an access password, where the request information of acquiring the service set identifier and the access password is used to indicate that the terminal requests to acquire the service set identifier and the access password for accessing a second wireless network of the access point.

The sender 910 sends the access request information and the request information of acquiring the service set identifier and the access password to the access point.

The receiver 930 is configured to receive a first IP address sent by the access point according to the access request information. The receiver 930 sends the first IP address to the processor 920.

The receiver 930 is further configured to receive the service set identifier and the access password that are of the second wireless network and sent by the access point, where when the access point determines the terminal as a target terminal according to the access request information or the request information of acquiring the service set identifier and the access password, the service set identifier and the access password of the second wireless network are a service set identifier and an access password that are sent to the terminal. The receiver 930 sends the service set identifier and the access password of the second wireless network to the processor 920.

The receiver 930 is further configured to receive a second IP address sent by the access point, where when the access point determines that the service set identifier and the access password of the second wireless network match the received service set identifier and access password, the second IP address is an IP address allocated to the terminal. The receiver 930 sends the second IP address to the processor 920.

The processor 920 is configured to receive the first IP address and access the first wireless network of the access point according to the first IP address.

The processor 920 is further configured to receive the service set identifier and the access password of the second wireless network and request to connect to the second wireless network by using the service set identifier and the access password of the second wireless network.

The processor 920 is further configured to receive the second IP address and access the second wireless network according to the second IP address.

Optionally, the processor 920 is further configured to: after the terminal accesses the second wireless network according to the second IP address, delete a service set identifier of the first wireless network.

In the foregoing solution, the terminal accesses a second wireless network according to a service set identifier SSID2 and an access password of the second wireless network. Because a user does not need to manually enter the access password, an access password with high complexity may be set, or a binary password that cannot be guessed may be set, which improves network security and is more convenient for the user to use.

Further, because the first wireless network does not have an actual network switching function, a core network cannot be accessed. The terminal deletes the SSID1 to avoid a case in which the terminal cannot acquire a network service due to a network connection failure that is caused because the terminal is unexpectedly and automatically connected to the SSID1 when the terminal is disconnected from the SSID2.

It can be understood that in all implementation manners of this application, when an administrator establishes a home local area network, and a "visitor network" account and an "administrator" account are set in a network access apparatus (for example, an access point), a first wireless network SSID1 may also be shared as the "visitor network" account. In this case, an end user with an administrator identity may access a second wireless network SSID2 by using the first wireless network SSID1, so as to access the home local area network, a device in the home local area network, and a core network, and a visitor may access the core network by using the first wireless network SSID1 but cannot access the home local area network and the device in the home local area network, thereby preventing information leakage in the home local area network.

In the several implementation manners provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the implementation manners of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A wireless network access apparatus (120), wherein the apparatus comprises a receiving module, a control module, and a sending module, wherein:
the receiving module (210) is configured to receive, by using a first wireless network, access request information sent by a terminal, wherein the access request information is used to indicate that the terminal requests to access the first wireless network;
the receiving module is further configured to receive, by using the first wireless network, request information that is of acquiring a service set identifier and an access password of a second wireless network and is sent by the terminal, wherein the request information of acquiring the service set identifier and the access password of the second wireless network is used to indicate that the terminal requests to acquire the service set identifier and the access password for accessing the second wireless network; and the receiving module is further configured to receive, by using the first wireless network, a service set identifier and an access password that are sent by the terminal;
the control module (220) is configured to allocate a first IP address to the terminal according to the access request information received by the receiving module;
the control module is further configured to: when the terminal is determined as a target terminal according to the access request information received by the receiving module or the request information, received by the receiving module, of acquiring the service set identifier and the access password of the second wireless network, allocate, to the terminal, the service set identifier and the access password for accessing the second wireless network, 5 , whereby the target terminal is the terminal that is the first one for accessing the first wireless network ;
the control module is further configured to: when it is determined that the service set identifier and the access password of the second wireless network match the received service set identifier and access password, allocate a second IP address to the terminal;
the sending module (230) is configured to send, to the terminal by using the first wireless network, the first IP address allocated by the control module, so that the terminal accesses the first wireless network according to the first IP address;
the sending module is further configured to send, to the terminal by using the first wireless network, the service set identifier and the access password that are of the second wireless network and allocated by the control module; and
the sending module is further configured to send, to the terminal by using the second wireless network, the second IP address allocated by the control module, so that the terminal accesses the second wireless network according to the second IP address.

2. The apparatus according to claim 1, wherein the control module is further configured to: when the terminal is determined as the target terminal according to the access request information received by the receiving module or the request information, received by the receiving module, of acquiring the service set identifier and the access password of the second wireless network, add a MAC address of the terminal to a name list that is allowed to access the second wireless network.

3. The apparatus according to claim 1 or 2, wherein the control module is further configured to hide the service set identifier of the second wireless network.

4. The apparatus according to any one of claims 1 to 3, wherein when it is determined that a time at which the access request information is received falls within a preset time, the control module is configured to allocate the first IP address to the terminal according to the access request information received by the receiving module.

5. A terminal (110), wherein the terminal comprises a sending module, a control module, and a receiving module, wherein:
the sending module (310) is configured to send access request information, wherein the access request information is used to indicate that the terminal requests to access a first wireless network of an access point;
the sending module is further configured to send request information of acquiring a service set identifier and an access password, wherein the request information of acquiring the service set identifier and the access password is used to indicate that the terminal requests to acquire the service set identifier and the access password for accessing a second wireless network of the access point;
the sending module sends the access request information and the request information of acquiring the service set identifier and the access password to the access point;
the receiving module (330) is configured to receive a first IP address sent by the access point according to the access request information;
the receiving module is further configured to receive the service set identifier and the access password that are of the second wireless network and sent by the access point, wherein when the access point determines the terminal as a target terminal according to the access request information or the request information of acquiring the service set identifier and the access password, the service set identifier and the access password of the second wireless network are a service set identifier and an access password that are sent to the terminal, whereby the target terminal is the terminal that is the first one for accessing the first wireless network;
the receiving module is further configured to receive a second IP address sent by the access point, wherein when the access point determines that the service set identifier and the access password of the second wireless network match the received service set identifier and access password, the second IP address is an IP address allocated to the terminal;
the receiving module sends the first IP address, the service set identifier and the access password for accessing the second wireless network, and the second IP address to the control module;
the control module (320) is configured to receive the first IP address and access the first wireless network of the access point according to the first IP address;
the control module is further configured to receive the service set identifier and the access password of the second wireless network and request to connect to the second wireless network by using the service set identifier and the access password of the second wireless network; and
the control module is further configured to receive the second IP address and access the second wireless network according to the second IP address.

6. The terminal according to claim 5, wherein the control module is further configured to: after the terminal accesses the second wireless network according to the second IP address, delete a service set identifier of the first wireless network.

7. A wireless network access method, wherein the method comprises the following steps:
receiving (401), by using a first wireless network, access request information sent by a terminal, and allocating a first IP address to the terminal according to the access request information, wherein the access request information is used to indicate that the terminal requests to access the first wireless network;
sending (402) the first IP address to the terminal by using the first wireless network, so that the terminal accesses the first wireless network according to the first IP address;
receiving (403), by using the first wireless network, request information that is of acquiring a service set identifier and an access password and sent by the terminal, wherein the request information of acquiring the service set identifier and the access password is used to indicate that the terminal requests to acquire the service set identifier and the access password for accessing a second wireless network;
allocating (404), to the terminal, the service set identifier and the access password for accessing the second wireless network, and sending the service set identifier and the access password of the second wireless network to the terminal by using the first wireless network, when the terminal is determined as a target terminal according to the access request information or the request information of acquiring the service set identifier and the access password, whereby the target terminal is the terminal that is the first one for accessing the first wireless network;
when it is determined (405) that the allocated service set identifier and access password of the second wireless network match a received service set identifier and access password, allocating a second IP address to the terminal; and
sending (406) the second IP address to the terminal by using the second wireless network, so that the terminal accesses the second wireless network according to the second IP address.

8. The method according to claim 7, wherein the step of allocating, to the terminal, the service set identifier and the access password for accessing the second wireless network, and sending the service set identifier and the access password of the second wireless network to the terminal by using the first wireless network, when the terminal is determined as the target terminal according to the access request information or the request information of acquiring the service set identifier and the access password further comprises: adding a MAC address of the terminal to a name list that is allowed to access the second wireless network.

9. The method according to claim 7 or 8, wherein the method further comprises:
hiding the service set identifier of the second wireless network.

10. The method according to any one of claims 7 to 9, wherein the step of receiving access request information sent by a terminal, and allocating a first IP address to the terminal according to the access request information is specifically:
receiving the access request information sent by the terminal, and when it is determined that a time at which the access request information is received falls within a preset time, allocating the first IP address to the terminal according to the access request information.

11. A wireless network access method, wherein the method comprises the following steps:
sending (601) access request information, wherein the access request information is used to indicate that a terminal requests to access a first wireless network of an access point;
receiving (602) a first IP address sent by the access point according to the access request information;
accessing (603) the first wireless network of the access point according to the first IP address;
sending (604) request information of acquiring a service set identifier and an access password, wherein the request information of acquiring the service set identifier and the access password is used to indicate that the terminal requests to acquire the service set identifier and the access password for accessing a second wireless network of the access point;
receiving (605) the service set identifier and the access password that are of the second wireless network and sent by the access point, wherein when the access point determines the terminal as a target terminal according to the access request information or the request information of acquiring the service set identifier and the access password, the service set identifier and the access password of the second wireless network are a service set identifier and an access password that are sent to the terminal, whereby the target terminal is the terminal that is the first one for accessing the first wireless network;
requesting (606) to access the second wireless network from the access point by using the received service set identifier and access password; and
receiving (607) a second IP address sent by the access point, and accessing the second wireless network according to the second IP address, wherein when the access point determines that the service set identifier and the access password that are of the second wireless network and allocated by the access point match the service set identifier and the access password that are received by the access point, the second IP address is an IP address allocated to the terminal.

12. The method according to claim 11, after the step of receiving a second IP address sent by the access point, and accessing the second wireless network according to the second IP address, further comprising: deleting a service set identifier of the first wireless network.

## Patentansprüche

1. Zugriffsvorrichtung für ein drahtloses Netzwerk (120), wobei die Vorrichtung ein Empfangsmodul, ein Steuerungsmodul und ein Sendemodul umfasst, wobei:
das Empfangsmodul (210) konfiguriert ist, um unter Verwendung eines ersten drahtlosen Netzwerks eine von einem Endgerät gesendete Zugriffsanforderungsinformation zu empfangen, wobei die Zugriffsanforderungsinformation verwendet wird, um anzuzeigen, dass das Endgerät den Zugriff auf das erste drahtlose Netzwerk anfordert;
das Empfangsmodul ferner konfiguriert ist, um unter Verwendung des ersten drahtlosen Netzwerks eine Anforderungsinformation zu empfangen, die zum Erfassen eines "Service Set Identifier" und eines Zugriffskennworts eines zweiten drahtlosen Netzwerks dient und von dem Endgerät gesendet wird, wobei die Anforderungsinformation zum Erfassen des "Service Set Identifier" und des Zugriffskennworts des zweiten drahtlosen Netzwerks verwendet wird, um anzuzeigen, dass das Endgerät das Erfassen des "Service Set Identifier" und des Zugriffskennworts für den Zugriff auf das zweite drahtlose Netzwerk anfordert; und das Empfangsmodul ferner konfiguriert ist, um unter Verwendung des ersten drahtlosen Netzwerks einen "Service Set Identifier" und ein Zugriffskennwort zu empfangen, die von dem Endgerät gesendet werden;
das Steuerungsmodul (220) konfiguriert ist, um dem Endgerät eine erste IP-Adresse gemäß der durch das Empfangsmodul empfangenen Zugriffsanforderungsinformation zuzuweisen;
das Steuerungsmodul ferner konfiguriert ist, um: wenn das Endgerät als ein Zielendgerät gemäß der durch das Empfangsmodul empfangenen Zugriffsanforderungsinformation oder der von dem Empfangsmodul empfangenen Anforderungsinformation zur Erfassung des "Service Set Identifier" und des Zugriffskennworts des zweiten drahtlosen Netzwerks bestimmt wird, dem Endgerät den "Service Set Identifier" und das Zugriffskennwort für den Zugriff auf das zweite drahtlose Netzwerk zuzuweisen, wobei das Zielendgerät das Endgerät ist, das das erste für den Zugriff auf das erste drahtlose Netzwerk ist;
das Steuerungsmodul ferner konfiguriert ist, um: wenn bestimmt wird, dass der "Service Set Identifier" und das Zugriffskennwort des zweiten drahtlosen Netzwerks mit dem empfangenen "Service Set Identifier" und dem Zugriffskennwort übereinstimmen, dem Endgerät eine zweite IP-Adresse zuzuweisen;
das Sendemodul (230) konfiguriert ist, um unter Verwendung des ersten drahtlosen Netzwerks die erste IP-Adresse, die durch das Steuerungsmodul zugewiesen wurde, an das Endgerät zu senden, sodass das Endgerät gemäß der ersten IP-Adresse auf das erste drahtlose Netzwerk zugreift;
das Sendemodul ferner konfiguriert ist, um unter Verwendung des ersten drahtlosen Netzwerks den "Service Set Identifier" und das Zugriffskennwort, die zu dem zweiten drahtlosen Netzwerk gehören und durch das Steuerungsmodul zugewiesen werden, an das Endgerät zu senden; und
das Sendemodul ferner konfiguriert ist, um unter Verwendung des zweiten drahtlosen Netzwerks die zweite IP-Adresse, die durch das Steuerungsmodul zugewiesen wird, an das Endgerät zu senden, sodass das Endgerät gemäß der zweiten IP-Adresse auf das zweite drahtlose Netzwerk zugreift.

2. Vorrichtung nach Anspruch 1, wobei das Steuerungsmodul ferner konfiguriert ist, um:
wenn das Endgerät als das Zielendgerät gemäß der durch das Empfangsmodul empfangenen Zugriffsanforderungsinformation oder der durch das Empfangsmodul empfangenen Anforderungsinformation zum Erfassen des "Service Set Identifier" und des Zugriffskennworts des zweiten drahtlosen Netzwerks bestimmt wird, eine MAC-Adresse des Endgeräts zu einer Namensliste hinzuzufügen, die auf das zweite drahtlose Netzwerk zugreifen darf.

3. Vorrichtung nach Anspruch 1 oder 2, wobei das Steuerungsmodul ferner konfiguriert ist, um den "Service Set Identifier" des zweiten drahtlosen Netzwerks zu verbergen.

4. Vorrichtung nach einem der Ansprüche 1 bis 3, wobei, wenn bestimmt wird, dass ein Zeitpunkt, zu dem die Zugriffsanforderungsinformation empfangen wird, in einen voreingestellten Zeitraum fällt, das Steuerungsmodul konfiguriert ist, um dem Endgerät die erste IP-Adresse gemäß der von dem Empfangsmodul empfangenen Zugriffsanforderungsinformation zuzuweisen.

5. Endgerät (110), wobei das Endgerät ein Sendemodul, ein Steuerungsmodul und ein Empfangsmodul umfasst, wobei:
das Sendemodul (310) konfiguriert ist, um eine Zugriffsanforderungsinformation zu senden, wobei die Zugriffsanforderungsinformation verwendet wird, um anzuzeigen, dass das Endgerät den Zugriff auf ein erstes drahtloses Netzwerk eines Zugangspunkts anfordert;
das Sendemodul ferner konfiguriert ist, um eine Anforderungsinformation zum Erfassen eines "Service Set Identifier" und eines Zugriffskennworts zu senden, wobei die Anforderungsinformation zum Erfassen des "Service Set Identifier" und des Zugriffskennworts verwendet wird, um anzuzeigen, dass das Endgerät das Erfassen des "Service Set Identifier" und des Zugriffskennworts für den Zugriff auf ein zweites drahtloses Netzwerk des Zugangspunkts anfordert;
das Sendemodul die Zugriffsanforderungsinformation und die Anforderungsinformation zum Erfassen des "Service Set Identifier" und des Zugriffskennworts an den Zugangspunkt sendet;
das Empfangsmodul (330) konfiguriert ist, um eine erste IP-Adresse zu empfangen, die von dem Zugangspunkt gemäß der Zugriffsanforderungsinformation gesendet wird;
das Empfangsmodul ferner konfiguriert ist, um den "Service Set Identifier" und das Zugriffskennwort zu empfangen, die von dem zweiten drahtlosen Netzwerk stammen und von dem Zugangspunkt gesendet werden, wobei, wenn der Zugangspunkt das Endgerät als ein Zielendgerät gemäß der Zugriffsanforderungsinformation und der Anforderungsinformation zum Erfassen des "Service Set Identifier" und des Zugriffskennworts bestimmt, der "Service Set Identifier" und das Zugriffskennwort des zweiten drahtlosen Netzwerks ein "Service Set Identifier" und ein Zugriffskennwort sind, die an das Endgerät gesendet werden, wobei das Zielendgerät das Endgerät ist, das das erste für den Zugriff auf das erste drahtlose Netzwerk ist;
das Empfangsmodul ferner konfiguriert ist, um eine zweite IP-Adresse zu empfangen, die von dem Zugangspunkt gesendet wird, wobei, wenn der Zugangspunkt bestimmt, dass der "Service Set Identifier" und das Zugriffskennwort des zweiten drahtlosen Netzwerks mit dem empfangenen "Service Set Identifier" und dem Zugriffskennwort übereinstimmen, die zweite IP-Adresse eine IP-Adresse ist, die dem Endgerät zugewiesen wird;
das Empfangsmodul die erste IP-Adresse, den "Service Set Identifier" und das Zugriffskennwort für den Zugriff auf das zweite drahtlose Netzwerk und die zweite IP-Adresse an das Steuerungsmodul sendet;
das Steuerungsmodul (320) konfiguriert ist, um die erste IP-Adresse zu empfangen und gemäß der ersten IP-Adresse auf das erste drahtlose Netzwerk des Zugangspunkts zuzugreifen;
das Steuerungsmodul ferner konfiguriert ist, um den "Service Set Identifier" und das Zugriffskennwort des zweiten drahtlosen Netzwerks zu empfangen und eine Verbindung mit dem zweiten drahtlosen Netzwerk unter Verwendung des "Service Set Identifier" und des Zugriffskennworts des zweiten drahtlosen Netzwerks anzufordern; und
das Steuerungsmodul ferner konfiguriert ist, um die zweite IP-Adresse zu empfangen und gemäß der zweiten IP-Adresse auf das zweite drahtlose Netzwerk zuzugreifen.

6. Endgerät nach Anspruch 5, wobei das Steuerungsmodul ferner konfiguriert ist, um:
nachdem das Endgerät gemäß der zweiten IP-Adresse auf das zweite drahtlose Netzwerk zugreift, einen "Service Set Identifier" des ersten drahtlosen Netzwerks zu löschen.

7. Zugriffsverfahren für ein drahtloses Netzwerk, wobei das Verfahren die folgenden Schritte umfasst:
Empfangen (401), unter Verwendung eines ersten drahtlosen Netzwerks, einer Zugriffsanforderungsinformation, die von einem Endgerät gesendet wird, und Zuweisen einer ersten IP-Adresse zu dem Endgerät gemäß der Zugriffsanforderungsinformation, wobei die Zugriffsanforderungsinformation verwendet wird, um anzuzeigen, dass das Endgerät den Zugriff auf das erste drahtlose Netzwerk anfordert;
Senden (402) der ersten IP-Adresse an das Endgerät unter Verwendung des ersten drahtlosen Netzwerks, sodass das Endgerät gemäß der ersten IP-Adresse auf das erste drahtlose Netzwerk zugreift;
Empfangen (403), unter Verwendung des ersten drahtlosen Netzwerks, einer Anforderungsinformation, die zum Erfassen eines "Service Set Identifier" und eines Zugriffskennworts dient und von dem Endgerät gesendet wird, wobei die Anforderungsinformation zum Erfassen des "Service Set Identifier" und des Zugriffskennworts verwendet wird, um anzuzeigen, dass das Endgerät das Erfassen des "Service Set Identifier" und des Zugriffskennworts für den Zugriff auf ein zweites drahtloses Netzwerk anfordert;
Zuweisen (404), zu dem Endgerät, des "Service Set Identifier" und des Zugriffskennworts für den Zugriff auf das zweite drahtlose Netzwerk und Senden des "Service Set Identifier" und des Zugriffskennworts des zweiten drahtlosen Netzwerks an das Endgerät unter Verwendung des ersten drahtlosen Netzwerks, wenn das Endgerät als ein Zielendgerät gemäß der Zugriffsanforderungsinformation oder der Anforderungsinformation zum Erfassen des "Service Set Identifier" und des Zugriffskennworts bestimmt wird, wobei das Zielendgerät das Endgerät ist, das das erste für den Zugriff auf das erste drahtlose Netzwerk ist;
wenn bestimmt wird (405), dass der zugewiesene "Service Set Identifier" und das zugewiesene Zugriffskennwort des zweiten drahtlosen Netzwerks mit einem empfangenen "Service Set Identifier" und Zugriffskennwort übereinstimmen, Zuweisen einer zweiten IP-Adresse zu dem Endgerät; und
Senden (406) der zweiten IP-Adresse an das Endgerät unter Verwendung des zweiten drahtlosen Netzwerks,
sodass das Endgerät gemäß der zweiten IP-Adresse auf das zweite drahtlose Netzwerk zugreift.

8. Verfahren nach Anspruch 7, wobei der Schritt des Zuweisens des "Service Set Identifier" und des Zugriffskennworts für den Zugriff auf das zweite drahtlose Netzwerk an das Endgerät und das Senden des "Service Set Identifier" und des Zugriffskennworts des zweiten drahtlosen Netzwerks an das Endgerät unter Verwendung des ersten drahtlosen Netzwerks, wenn das Endgerät als das Zielendgerät gemäß der Zugriffsanforderungsinformation oder der Anforderungsinformation für das Erfassen des "Service Set Identifier" und des Zugriffskennworts bestimmt wird, ferner umfasst: Hinzufügen einer MAC-Adresse des Endgeräts zu einer Namensliste, die auf das zweite drahtlose Netzwerk zugreifen darf.

9. Verfahren nach Anspruch 7 oder 8, wobei das Verfahren ferner umfasst: Verbergen des "Service Set Identifier" des zweiten drahtlosen Netzwerks.

10. Verfahren nach einem der Ansprüche 7 bis 9, wobei der Schritt des Empfangens einer von einem Endgerät gesendeten Zugriffsanforderungsinformation und des Zuweisens einer ersten IP-Adresse an das Endgerät gemäß der Zugriffsanforderungsinformation insbesondere umfasst:
Empfangen der von dem Endgerät gesendeten Zugriffsanforderungsinformation, und wenn bestimmt wird, dass ein Zeitpunkt, zu dem die Zugriffsanforderungsinformation empfangen wird, in einen voreingestellten Zeitraum fällt, Zuweisen der ersten IP-Adresse gemäß der von dem Empfangsmodul empfangenen Zugriffsanforderungsinformation an das Endgerät.

11. Zugriffsverfahren für ein drahtloses Netzwerk, wobei das Verfahren die folgenden Schritte umfasst:
Senden (601) einer Zugriffsanforderungsinformation, wobei die Zugriffsanforderungsinformation verwendet wird, um anzuzeigen, dass ein Endgerät den Zugriff auf ein erstes drahtloses Netzwerk eines Zugangspunkts anfordert;
Empfangen (602) einer ersten IP-Adresse, die von dem Zugangspunkt gemäß der Zugriffsanforderungsinformation gesendet wird;
Zugreifen (603) auf das erste drahtlose Netzwerk des Zugangspunkts gemäß der ersten IP-Adresse;
Senden (604) einer Anforderungsinformation zum Erfassen eines "Service Set Identifier" und eines Zugriffskennworts, wobei die Anforderungsinformation zum Erfassen des "Service Set Identifier" und des Zugriffskennworts verwendet wird, um anzuzeigen, dass das Endgerät das Erfassen des "Service Set Identifier" und des Zugriffskennworts für den Zugriff auf ein zweites drahtloses Netzwerk des Zugangspunkts anfordert;
Empfangen (605) des "Service Set Identifier" und des Zugriffskennworts, die von dem zweiten drahtlosen Netzwerk stammen und durch den Zugangspunkt gesendet werden, wobei, wenn der Zugangspunkt das Endgerät als ein Zielendgerät gemäß der Zugriffsanforderungsinformation und der Anforderungsinformation zum Erfassen des "Service Set Identifier" und des Zugriffskennworts bestimmt, der "Service Set Identifier" und das Zugriffskennwort des zweiten drahtlosen Netzwerks ein "Service Set Identifier" und ein Zugriffskennwort sind, die an das Endgerät gesendet werden, wobei das Zielendgerät das Endgerät ist, das das erste für den Zugriff auf das erste drahtlose Netzwerk ist;
Anfordern (606) des Zugriffs auf das zweite drahtlose Netzwerk von dem Zugangspunkt aus unter Verwendung des "Service Set Identifier" und des Zugriffskennworts; und
Empfangen (607) einer zweiten IP-Adresse, die von dem Zugangspunkt gesendet wird, und Zugreifen auf das zweite drahtlose Netzwerk gemäß der zweiten IP-Adresse, wobei, wenn der Zugangspunkt bestimmt, dass der "Service Set Identifier" und das Zugriffskennwort, die von dem zweiten drahtlosen Netzwerk stammen und durch den Zugangspunkt zugewiesen werden, mit dem "Service Set Identifier" und dem Zugriffskennwort übereinstimmen, die von dem Zugangspunkt empfangen werden, die zweite IP-Adresse eine IP-Adresse ist, die dem Endgerät zugewiesen wird.

12. Verfahren nach Anspruch 11, nach dem Schritt des Empfangens einer zweiten IP-Adresse, die von dem Zugangspunkt gesendet wird, und des Zugreifens auf das zweite drahtlose Netzwerk gemäß der zweiten IP-Adresse, ferner umfassend: Löschen eines "Service Set Identifier" des ersten drahtlosen Netzwerks.

## Revendications

1. Appareil d'accès à un réseau sans fil (120), l'appareil comprenant un module de réception, un module de commande et un module d'envoi :
le module de réception (210) étant configuré pour recevoir, en utilisant un premier réseau sans fil, des informations de demande d'accès envoyées par un terminal, les informations de demande d'accès étant utilisées pour indiquer que le terminal demande d'avoir accès au premier réseau sans fil ;
le module de réception étant en outre configuré pour recevoir, en utilisant le premier réseau sans fil, des informations de demande qui sont des informations de demande d'acquisition d'un identifiant d'ensemble de services et d'un mot de passe d'accès d'un second réseau sans fil et qui sont envoyées par le terminal, les informations de demande d'acquisition de l'identifiant d'ensemble de services et du mot de passe d'accès du second réseau sans fil étant utilisées pour indiquer que le terminal demande d'acquérir l'identifiant d'ensemble de services et le mot de passe d'accès pour avoir accès au second réseau sans fil ; et le module de réception étant en outre configuré pour recevoir, en utilisant le premier réseau sans fil, un identifiant d'ensemble de services et un mot de passe d'accès qui sont envoyés par le terminal ;
le module de commande (220) étant configuré pour attribuer une première adresse IP au terminal en fonction des informations de demande d'accès reçues par le module de réception ;
le module de commande étant en outre configuré pour: lorsque le terminal est déterminé en tant que terminal cible en fonction des informations de demande d'accès reçues par le module de réception ou des informations de demande, reçues par le module de réception, d'acquisition de l'identifiant d'ensemble de services et du mot de passe d'accès du second réseau sans fil, attribuer, au terminal, l'identifiant d'ensemble de services et le mot de passe d'accès pour avoir accès au second réseau sans fil, 5, grâce à quoi le terminal cible est le terminal qui est le premier à avoir accès au premier réseau sans fil ;
le module de commande étant en outre configuré pour : lorsqu'il est déterminé que l'identifiant d'ensemble de services et le mot de passe d'accès du second réseau sans fil correspondent à l'identifiant d'ensemble de services et au mot de passe d'accès reçus, attribuer une seconde adresse IP au terminal ;
le module d'envoi (230) étant configuré pour envoyer, au terminal, en utilisant le premier réseau sans fil, la première adresse IP attribuée par le module de commande de telle sorte que le terminal ait accès au premier réseau sans fil en fonction de la première adresse IP ;
le module d'envoi étant en outre configuré pour envoyer, au terminal, en utilisant le premier réseau sans fil, l'identifiant d'ensemble de services et le mot de passe d'accès qui sont ceux du second réseau sans fil et attribués par le module de commande ; et
le module d'envoi étant en outre configuré pour envoyer, au terminal, en utilisant le second réseau sans fil, la seconde adresse IP attribuée par le module de commande de telle sorte que le terminal ait accès au second réseau sans fil en fonction de la seconde adresse IP.

2. Appareil selon la revendication 1, dans lequel le module de commande est en outre configuré pour: lorsque le terminal est déterminé en tant que terminal cible en fonction des informations de demande d'accès reçues par le module de réception ou des informations de demande, reçues par le module de réception, d'acquisition de l'identifiant d'ensemble de services et du mot de passe d'accès du second réseau sans fil, ajouter une adresse de contrôle MAC du terminal à une liste de noms qui est autorisée d'avoir accès au second réseau sans fil.

3. Appareil selon la revendication 1 ou 2, dans lequel le module de commande est en outre configuré pour cacher l'identifiant d'ensemble de services du second réseau sans fil.

4. Appareil selon l'une quelconque des revendications 1 à 3, dans lequel, lorsqu'il est déterminé qu'un moment auquel les informations de demande d'accès sont reçues, tombe dans une plage prédéfinie, le module de commande est configuré pour attribuer la première adresse IP au terminal en fonction des informations de demande d'accès reçues par le module de réception.

5. Terminal (110), le terminal comprenant un module d'envoi, un module de commande et un module de réception :
le module d'envoi (310) étant configuré pour envoyer des informations de demande d'accès, les informations de demande d'accès étant utilisées pour indiquer que le terminal demande d'avoir accès à un premier réseau sans fil d'un point d'accès ;
le module d'envoi étant en outre configuré pour envoyer des informations de demande d'acquisition d'un identifiant d'ensemble de services et d'un mot de passe d'accès, les informations de demande d'acquisition de l'identifiant d'ensemble de services et du mot de passe d'accès étant utilisées pour indiquer que le terminal demande d'acquérir l'identifiant d'ensemble de services et le mot de passe d'accès pour avoir accès à un second réseau sans fil du point d'accès ;
le module d'envoi envoyant les informations de demande d'accès et les informations de demande d'acquisition de l'identifiant d'ensemble de services et du mot de passe d'accès au point d'accès ;
le module de réception (330) étant configuré pour recevoir une première adresse IP envoyée par le point d'accès en fonction des informations de demande d'accès ;
le module de réception étant en outre configuré pour recevoir l'identifiant d'ensemble de services et le mot de passe d'accès qui sont ceux du second réseau sans fil et envoyés par le point d'accès, lorsque le point d'accès détermine le terminal en tant que terminal cible en fonction des informations de demande d'accès ou des informations de demande d'acquisition de l'identifiant d'ensemble de services et du mot de passe d'accès, l'identifiant d'ensemble de services et le mot de passe d'accès du second réseau sans fil étant un identifiant d'ensemble de services et un mot de passe d'accès qui sont envoyés au terminal, grâce à quoi le terminal cible est le terminal qui est le premier à avoir accès au premier réseau sans fil ;
le module de réception étant en outre configuré pour recevoir une seconde adresse IP envoyée par le point d'accès, lorsque le point d'accès détermine que l'identifiant d'ensemble de services et le mot de passe d'accès du second réseau sans fil correspondent à l'identifiant d'ensemble de services et au mot de passe d'accès reçus, la seconde adresse IP étant une adresse IP attribuée au terminal ;
le module de réception envoyant la première adresse IP, l'identifiant d'ensemble de services et le mot de passe d'accès pour avoir accès au second réseau sans fil ainsi que la seconde adresse IP au module de commande ;
le module de commande (320) étant configuré pour recevoir la première adresse IP et pour avoir accès au premier réseau sans fil du point d'accès en fonction de la première adresse IP ;
le module de commande étant en outre configuré pour recevoir l'identifiant d'ensemble de services et le mot de passe d'accès du second réseau sans fil et pour demander d'être connecté au second réseau sans fil en utilisant l'identifiant d'ensemble de services et le mot de passe d'accès du second réseau sans fil ; et
le module de commande étant en outre configuré pour recevoir la seconde adresse IP et pour avoir accès au second réseau sans fil en fonction de la seconde adresse IP.

6. Terminal selon la revendication 5, dans lequel le module de commande est en outre configuré : pour après que le terminal a accès au second réseau sans fil en fonction de la seconde adresse IP, supprimer un identifiant d'ensemble de services du premier réseau sans fil.

7. Procédé d'accès à un réseau sans fil, le procédé comprenant les étapes suivantes consistant :
à recevoir (401), en utilisant un premier réseau sans fil, des informations de demande d'accès envoyées par un terminal, et à attribuer une première adresse IP au terminal en fonction des informations de demande d'accès, les informations de demande d'accès étant utilisées pour indiquer que le terminal demande d'avoir accès au premier réseau sans fil ;
à envoyer (402) la première adresse IP au terminal en utilisant le premier réseau sans fil de telle sorte que le terminal ait accès au premier réseau sans fil en fonction de la première adresse IP ;
à recevoir (403), en utilisant le premier réseau sans fil, des informations de demande qui sont des informations de demande d'acquisition d'un identifiant d'ensemble de services et d'un mot de passe d'accès et qui sont envoyées par le terminal, les informations de demande d'acquisition de l'identifiant d'ensemble de services et du mot de passe d'accès étant utilisées pour indiquer que le terminal demande d'acquérir l'identifiant d'ensemble de services et le mot de passe d'accès pour avoir accès à un second réseau sans fil ;
à attribuer (404), au terminal, l'identifiant d'ensemble de services et le mot de passe d'accès pour avoir accès au second réseau sans fil et à envoyer l'identifiant d'ensemble de services et le mot de passe d'accès du second réseau sans fil au terminal en utilisant le premier réseau sans fil lorsque le terminal est déterminé en tant que terminal cible en fonction des informations de demande d'accès ou des informations de demande d'acquisition de l'identifiant d'ensemble de services et du mot de passe d'accès, grâce à quoi le terminal cible est le terminal qui est le premier à avoir accès au premier réseau sans fil ;
lorsqu'il est déterminé (405) que l'identifiant d'ensemble de services et le mot de passe d'accès attribués du second réseau sans fil correspondent à un identifiant d'ensemble de services et à un mot de passe d'accès reçus, à attribuer une seconde adresse IP au terminal ; et
à envoyer (406) la seconde adresse IP au terminal en utilisant le second réseau sans fil de telle sorte que le terminal ait accès au second réseau sans fil en fonction de la seconde adresse IP.

8. Procédé selon la revendication 7, dans lequel l'étape consistant à attribuer, au terminal, l'identifiant d'ensemble de services et le mot de passe d'accès pour avoir accès au second réseau sans fil et à envoyer l'identifiant d'ensemble de services et le mot de passe d'accès du second réseau sans fil au terminal en utilisant le premier réseau sans fil, lorsque le terminal est déterminé en tant que terminal cible en fonction des informations de demande d'accès ou des informations de demande d'acquisition de l'identifiant d'ensemble de services et du mot de passe d'accès consiste : à ajouter une adresse de contrôle MAC du terminal à une liste de noms qui est autorisée pour avoir accès au second réseau sans fil.

9. Procédé selon la revendication 7 ou 8, le procédé consistant en outre : à cacher l'identifiant d'ensemble de services du second réseau sans fil.

10. Procédé selon l'une quelconque des revendications 7 à 9, dans lequel l'étape consistant à recevoir des informations de demande d'accès envoyées par un terminal et à attribuer une première adresse IP au terminal en fonction des informations de demande d'accès consiste spécialement :
à recevoir les informations de demande d'accès envoyées par le terminal et, lorsqu'il est déterminé qu'un moment auquel les informations de demande d'accès sont reçues, tombe dans une plage prédéfinie, à attribuer la première adresse IP au terminal en fonction des informations de demande d'accès.

11. Procédé d'accès à un réseau sans fil, le procédé comprenant les étapes suivantes consistant :
à envoyer (601) des informations de demande d'accès, les informations de demande d'accès étant utilisées pour indiquer qu'un terminal demande d'avoir accès à un premier réseau sans fil d'un point d'accès ;
à recevoir (602) une première adresse IP envoyée par le point d'accès en fonction des informations de demande d'accès ;
à avoir accès (603) au premier réseau sans fil du point d'accès en fonction de la premiére adresse IP ;
à envoyer (604) des informations de demande d'acquisition d'un identifiant d'ensemble de services et d'un mot de passe d'accès, les informations de demande d'acquisition de l'identifiant d'ensemble de services et du mot de passe d'accès étant utilisées pour indiquer que le terminal demande d'acquérir l'identifiant d'ensemble de services et le mot de passe d'accès pour avoir accès à un second réseau sans fil du point d'accès ;
à recevoir (605) l'identifiant d'ensemble de services et le mot de passe d'accès qui sont ceux du second réseau sans fil et envoyés par le point d'accès, lorsque le point d'accès détermine le terminal en tant que terminal cible en fonction des informations de demande d'accès ou des informations de demande d'acquisition de l'identifiant d'ensemble de services et du mot de passe d'accès, l'identifiant d'ensemble de services et le mot de passe d'accès du second réseau sans fil étant un identifiant d'ensemble de services et un mot de passe d'accès qui sont envoyés au terminal, grâce à quoi le terminal cible est le terminal qui est le premier à avoir accès au premier réseau sans fil;
à demander (606) d'avoir accès au second réseau sans fil à partir du point d'accès en utilisant l'identifiant d'ensemble de services et le mot de passe d'accès reçus ; et
à recevoir (607) une seconde adresse IP envoyée par le point d'accès et à avoir accès au second réseau sans fil en fonction de la seconde adresse IP, lorsque le poids d'accès détermine que l'identifiant d'ensemble de services et le mot de passe d'accès qui sont ceux du second réseau sans fil et attribués par le point d'accès correspondent à l'identifiant d'ensemble de services et au mot de passe d'accès qui sont reçus par le point d'accès, la seconde adresse IP étant une adresse IP attribuée au terminal.

12. Procédé selon la revendication 11, après l'étape de réception d'une seconde adresse IP envoyée par le point d'accès et d'accès au second réseau sans fil en fonction de la seconde adresse IP, consistant en outre : à supprimer un identifiant d'ensemble de services du premier réseau sans fil.
